# EUROPEAN PATENT SPECIFICATION

(11) **EP 1 728 816 B1**
(45) Date of publication and mention of the grant of the patent: **22.12.2010**
(21) Application number: 06252461.6
(22) Date of filing: 10.05.2006
(51) Int. Cl.: C08K 3/22, C08K 3/30, C08K 3/16, C08K 3/14, C08K 3/04, C08J 5/18, B32B 27/00, C08J 3/28, C08K 5/00

(54) **Method of activating the shrink characteristic of a film**
METHODE ZUR AKTIVIERUNG DES SCHRUMPFVERHLTENS EINES FILMS
PROCEDE D' ACTIVATION POUR LA CARACTERISTIQUE DE RETRAIT D' UN FILM

(30) Priority: 01.06.2005 US 142044
(43) Date of publication of application: 06.12.2006
(73) Proprietor: Cryovac, Inc., Duncan, SC 29334-0464 (US)
(72) Inventor: Grah, Michael, Greenville South Carolina 29615 (US); Speer, Drew, Simpsonsville, South Carolina 29681 (US); Havens, Marvin R., Greer, South Carolina 29650 (US)
(74) Representative: Jackson, Martin Peter

(56) References cited:
- EP-A- 1 447 427
- EP-A- 1 541 322
- EP-A1- 1 004 626
- WO-A-2005/066248
- WO-A2-2005/110747
- GB-A- 1 528 193
- JP-A- 55 079 209
- JP-A- 2002 047 338
- US-A- 5 648 020
- US-A- 5 756 577
- US-A1- 2002 065 346
- US-A1- 2004 121 144

## Description

### BACKGROUND OF THE INVENTION

The present invention relates to thermoplastic shrink films and methods of shrinking a film.

Activating the shrink characteristic of a heat-shrinkable film may be accomplished by immersing the film in a hot-water bath or conveying the film through a hot-air tunnel. However, such exposure may heat to an undesirable extent a product (e.g., a food product) that is enclosed within the package comprising the shrink film. Such exposure method may also require extensive hot-water bath or heat tunnel equipment.

### SUMMARY OF THE INVENTION

One or more embodiments of the present invention may address one or more of the aforementioned problems.

The present invention provides a method of activating the shrink characteristic of a film comprising the steps of: providing a film comprising: one or more thermoplastic polymers; and at least about 0.01 weight % based on the weight of the film of photothermic material comprising one or more materials selected from organic photothermic material, titanium dioxide, zinc oxide, iron oxide, tin oxide, zinc sulfide, gallium nitride, gallium disulfide, cuprous chloride, copper aluminum disulfide, and silicon carbide; and exposing the film to non-ionizing radiation at an average intensity at the surface of the film of at least 10 mW/cm² of radiation having wavelengths of from 200 to 700 nm to generate heat thereby: to shrink the film by at least 5% in at least one direction; and/or to increase the tension in the film by at least 0.35 MPa (50 pounds per square inch) in at least one direction.

These and other objects, advantages, and features of the invention may be more readily understood and appreciated by reference to the detailed description of the invention and the drawings.

### BRIEF DESCRIPTION OF THE DRAWINGS

Figure 1 is a representational cross-section of a film of one embodiment of the invention.
Figure 2 is a representational cross-section of a film of another embodiment of the invention.

### DETAILED DESCRIPTION OF THE INVENTION

In an embodiment of the invention, a method of activating a shrink characteristic of a film comprises the following steps. First, a film is provided that comprises one or more thermoplastic polymers and at least about 0.01 weight % of photothermic material excluding single walled nano tube material based on the weight of the film. Next, the film is exposed to non-ionizing radiation at an intensity at the surface of the film of at least about 10 mW/cm² of radiation having wavelengths of from about 200 to 700 nm effective for to generate sufficient heat thereby to shrink the film by at least about 5% in at least one direction and/or to increase the tension in the film by at least about 0.35 Mpa (50 pounds per square inch (psi)) in at least one direction.

### Film with a Shrink Characteristic

The film comprising the photothermic material (i.e., the film), or a layer of the film, may comprise one or more thermoplastic polymers, for example, one or more of polyolefins (e.g., polyethylene, polypropylene), ethylene/vinyl alcohol copolymers, ionomers, vinyl plastics (e.g., polyvinyl chloride, polyvinylidene chloride), polyamide, and polyester. The film, or any of the film layers (e.g., any of the film layers discussed below), may comprise any of polymers discussed below in at least about, and/or at most about, any of the following weight percent values: 30, 40, 45, 50, 55, 60, 65, 70, 75, 80, 85, 90, 95, 97, 99 and 100% by weight of the film or by weight of the layer. The film may be a packaging film, such as a food packaging film.

### Polyolefins

Useful polyolefins include ethylene homo- and co-polymers and propylene homo- and co-polymers. The term "polyolefins" includes copolymers that contain at least 50 weight % monomer units derived from olefin. Ethylene homopolymers include high density polyethylene ("HDPE") and low density polyethylene ("LDPE"). Ethylene copolymers include ethylene/alphaolefin copolymers ("EAOs"), ethylene/unsaturated ester copolymers, and ethylene/(meth)acrylic acid. ("Copolymer" as used in this application means a polymer derived from two or more types of monomers, and includes terpolymers, etc.)

EAOs are copolymers of ethylene and one or more alpha-olefins, the copolymer having ethylene as the majority mole-percentage content. The comonomer may include one or more C₃-C₂₀ α-olefins, one or more C₄-C₁₂ α-olefins, and one or more C₄-C₈ α-olefins. Useful α-olefins include 1-butene, 1-hexene, 1-octene, and mixtures thereof.

EAOs include one or more of the following: 1) medium density polyethylene ("MDPE"), for example having a density of from 0.926 to 0.94 g/cm3; 2) linear medium density polyethylene ("LMDPE"), for example having a density of from 0.926 to 0.94 g/cm3; 3) linear low density polyethylene ("LLDPE"), for example having a density of from 0.915 to 0.930 g/cm3; 4) very-low or ultra-low density polyethylene ("VLDPE" and "ULDPE"), for example having density below 0.915 g/cm3, and 5) homogeneous EAOs. Useful EAOs include those having a density of less than about any of the following: 0.925, 0.922, 0.920, 0.917, 0.915, 0.912, 0.910, 0.907, 0.905, 0.903, 0.900, and 0.898 grams/cubic centimeter. Unless otherwise indicated, all polymer densities herein are measured according to ASTM D1505.

The polyethylene polymers may be either heterogeneous or homogeneous. As is known in the art, heterogeneous polymers have a relatively wide variation in molecular weight and composition distribution. Heterogeneous polymers may be prepared with, for example, conventional Ziegler-Natta catalysts.

On the other hand, homogeneous polymers are typically prepared using metallocene or other single-site catalysts. Such single-site catalysts typically have only one type of catalytic site, which is believed to be the basis for the homogeneity of the polymers resulting from the polymerization. Homogeneous polymers are structurally different from heterogeneous polymers in that homogeneous polymers exhibit a relatively even sequencing of comonomers within a chain, a mirroring of sequence distribution in all chains, and a similarity of length of all chains. As a result, homogeneous polymers have relatively narrow molecular weight and composition distributions. Examples of homogeneous polymers include the metallocene-catalyzed linear homogeneous ethylene/alpha-olefin copolymer resins available from the Exxon Chemical Company (Baytown, TX) under the EXACT trademark, linear homogeneous ethylene/alpha-olefin copolymer resins available from the Mitsui Petrochemical Corporation under the TAFMER trademark, and long-chain branched, metallocene-catalyzed homogeneous ethylene/alpha-olefin copolymer resins available from the Dow Chemical Company under the AFFINITY trademark.

Another useful ethylene copolymer is ethylene/unsaturated ester copolymer, which is the copolymer of ethylene and one or more unsaturated ester monomers. Useful unsaturated esters include: 1) vinyl esters of aliphatic carboxylic acids, where the esters have from 4 to 12 carbon atoms, and 2) alkyl esters of acrylic or methacrylic acid (collectively, "alkyl (meth)acrylate"), where the esters have from 4 to 12 carbon atoms.

Representative examples of the first ("vinyl ester") group of monomers include vinyl acetate, vinyl propionate, vinyl hexanoate, and vinyl 2-ethylhexanoate. The vinyl ester monomer may have from 4 to 8 carbon atoms, from 4 to 6 carbon atoms, from 4 to 5 carbon atoms, and preferably 4 carbon atoms.

Representative examples of the second ("alkyl (meth)acrylate") group of monomers include methyl acrylate, ethyl acrylate, isobutyl acrylate, n-butyl acrylate, hexyl acrylate, and 2-ethylhexyl acrylate, methyl methacrylate, ethyl methacrylate, isobutyl methacrylate, n-butyl methacrylate, hexyl methacrylate, and 2-ethylhexyl methacrylate. The alkyl (meth)acrylate monomer may have from 4 to 8 carbon atoms, from 4 to 6 carbon atoms, and preferably from 4 to 5 carbon atoms.

The unsaturated ester (i.e., vinyl ester or alkyl (meth)acrylate) comonomer content of the ethylene/unsaturated ester copolymer may be at least about 3, 6, and 8 wt. % and/or may be at most about 12, 18, and 40 wt. %, based on the weight of the copolymer. Useful ethylene contents of the ethylene/unsaturated ester copolymer include at least about, and/or at most about, any of the following: 60 wt. %, 82 weight %, 85 weight %, 88 weight %, 92 wt. %, 93 wt. %, 94 weight %, and 97 wt. %, based on the weight of the copolymer.

Representative examples of ethylene/unsaturated ester copolymers include ethylene/methyl acrylate, ethylene/methyl methacrylate, ethylene/ethyl acrylate, ethylene/ethyl methacrylate, ethylene/butyl acrylate, ethylene/2-ethylhexyl methacrylate, and ethylene/vinyl acetate.

Another useful ethylene copolymer includes ethylene/(meth)acrylic acid copolymer, which is the copolymer of ethylene and acrylic acid, methacrylic acid, or both.

Other useful ethylene copolymer includes ethylene/norbornene copolymer and ethylene/propylene/diene (EPDM) copolymer. Examples of ethylene/norbornene copolymer include those sold under the Topas™ and Zeonor™ trademarks. Exemplary EPDM copolymer include those sold under the Vistalon™ trademark.

Useful propylene copolymer includes propylene/ethylene copolymers ("EPC") and propylene/butene copolymers, which are copolymers of propylene and ethylene, and propylene and butene, respectively, having a majority weight % content of propylene, such as those having, for example, an ethylene comonomer content of less than about 10%, less than about 6%, and/or at least about 2% by weight.

### EVOH

Ethylene/vinyl alcohol copolymer ("EVOH") is another useful thermoplastic. EVOH may have an ethylene content of about 32%, or at least about any of the following values: 20%, 25%, 30%, and 38% by weight. EVOH may have an ethylene content of at most about any of the following values: 50%, 48%, 40%, 35%, and 33% by weight. EVOH may include saponified or hydrolyzed ethylene/vinyl acetate copolymers, such as those having a degree of hydrolysis of at least about any of the following values: 50% and 85%. EVOH may have an ethylene content ranging from about 20 mole percent to about 44 mole percent. Exemplary EVOH is commercially available from Evalca Corporation having ethylene contents of 29, 32, 35, 38 and 44 mole percent.

### Ionomer

Another useful thermoplastic is ionomer, which is a copolymer of ethylene and an ethylenically unsaturated monocarboxylic acid having the carboxylic acid groups partially neutralized by a metal ion, such as sodium or zinc. Useful ionomers include those in which sufficient metal ion is present to neutralize from about 10% to about 60% of the acid groups in the ionomer. The carboxylic acid is preferably "(meth)acrylic acid" - which means acrylic acid and/or methacrylic acid. Useful ionomers include those having at least 50 weight % and preferably at least 80 weight % ethylene units. Useful ionomers also include those having from 1 to 20 weight percent acid units. Useful ionomers are available, for example, from Dupont Corporation (Wilmington, DE) under the SURLYN trademark.

### Vinyl Plastics

Useful vinyl plastics include polyvinyl chloride ("PVC"), vinylidene chloride polymer ("PVdC"), and polyvinyl alcohol ("PVOH"). Polyvinyl chloride ("PVC") refers to a vinyl chloride-containing polymer or copolymer - that is, a polymer that includes at least 50 weight percent monomer units derived from vinyl chloride (CH₂ = CHCl) and also, optionally, one or more comonomer units, for example, derived from vinyl acetate. One or more plasticizers may be compounded with PVC to soften the resin and/or enhance flexibility and processibility. Useful plasticizers for this purpose are known in the art.

Another exemplary vinyl plastic is vinylidene chloride polymer ("PVdC"), which refers to a vinylidene chloride-containing polymer or copolymer - that is, a polymer that includes monomer units derived from vinylidene chloride (CH₂ = CCl₂) and also, optionally, monomer units derived from one or more of vinyl chloride, styrene, vinyl acetate, acrylonitrile, and C₁ -C₁₂ alkyl esters of (meth)acrylic acid (e.g., methyl acrylate, butyl acrylate, methyl methacrylate). As used herein, "(meth)acrylic acid" refers to both acrylic acid and/or methacrylic acid; and "(meth)acrylate" refers to both acrylate and methacrylate. Examples of PVdC include one or more of the following: vinylidene chloride homopolymer, vinylidene chloride/vinyl chloride copolymer ("VDCNC"), vinylidene chloride/methyl acrylate copolymer ("VDC/MA"), vinylidene chloride/ethyl acrylate copolymer, vinylidene chloride/ethyl methacrylate copolymer, vinylidene chloride/methyl methacrylate copolymer, vinylidene chloride/butyl acrylate copolymer, vinylidene chloride/styrene copolymer, vinylidene chloride/acrylonitrile copolymer, and vinylidene chloride/vinyl acetate copolymer.

Useful PVdC includes that having at least about 75, at most about 95, and at most about 98 weight % vinylidene chloride monomer. Useful PVdC (for example, as applied by latex emulsion coating) includes that having at least about any of 5%, 10%, and 15% -- and/or at most about any of 25%, 22%, 20%, and 15 weight % -- comonomer with the vinylidene chloride monomer.

Useful PVdC includes that having a weight-average molecular weight (M_{w}) of at least about any of the following 10,000; 50,000; 80,000; 90,000; 100,000; 111,000; 120,000; 150,000; and 180,000; and at most about any of the following: 180,000, 170,000; 160,000; 150,000; 140,000; 100,000; and 50,000. Useful PVdC also includes that having a viscosity-average molecular weight (M_{z}) of at least about any of the following: 130,000; 150,000; 170,000; 200,000; 250,000; and 300,000; and at most about any of the following: 300,000; 270,000; 250,000; and 240,000.

A layer that includes PVdC may also include a thermal stabilizer (e.g., a hydrogen chloride scavenger such as epoxidized soybean oil) and a lubricating processing aid (e.g., one or more polyacrylates).

### Polyamide

Useful polyamides include those of the type that may be formed by the polycondensation of one or more diamines with one or more diacids and/or of the type that may be formed by the polycondensation of one or more amino acids (including those provided by the ring opening polymerization of lactams). Useful polyamides include aliphatic polyamides and aliphatic/aromatic polyamides.

Representative aliphatic diamines for making polyamides include those having the formula:

H₂N(CH₂)ₙNH₂

where n has an integer value of 1 to 16. Representative examples include trimethylenediamine, tetramethylenediamine, pentamethylenediamine, hexamethylenediamine, octamethylenediamine, decamethylenediamine, dodecamethylenediamine, hexadecamethylenediamine. Representative aromatic diamines include p-phenylenediamine, 4,4'-diaminodiphenyl ether, 4,4' diaminodiphenyl sulphone, 4,4'-diaminodiphenylethane. Representative alkylated diamines include 2,2-dimethylpentamethylenediamine, 2,2,4- trimethylhexamethylenediamine, and 2,4,4 trimethylpentamethylenediamine. Representative cycloaliphatic diamines include diaminodicyclohexylmethane. Other useful diamines include heptamethylenediamine, nonamethylenediamine, and the like.

Representative diacids for making polyamides include dicarboxylic acids, which may be represented by the general formula:

HOOC-Z-COOH

where Z is representative of a divalent aliphatic or cyclic radical containing at least 2 carbon atoms. Representative examples include aliphatic dicarboxylic acids, such as adipic acid, sebacic acid, octadecanedioic acid, pimelic acid, suberic acid, azelaic acid, dodecanedioic acid, and glutaric acid; and aromatic dicarboxylic acids, such as such as isophthalic acid and terephthalic acid.

The polycondensation reaction product of one or more or the above diamines with one or more of the above diacids may form useful polyamides. Representative polyamides of the type that may be formed by the polycondensation of one or more diamines with one or more diacids include aliphatic polyamides such as poly(hexamethylene adipamide) ("nylon-6,6"), poly(hexamethylene sebacamide) ("nylon-6,10"), poly(heptamethylene pimelamide) ("nylon-7,7"), poly(octamethylene suberamide) ("nylon-8,8"), poly(hexamethylene azelamide) ("nylon-6,9"), poly(nonamethylene azelamide) ("nylon-9,9"), poly(decamethylene azelamide) ("nylon-10,9"), poly(tetramethylenediamine-co-oxalic acid) ("nylon-4,2"), the polyamide of n-dodecanedioic acid and hexamethylenediamine ("nylon-6,12"), the polyamide of dodecamethylenediamine and n-dodecanedioic acid ("nylon-12,12").

Representative aliphatic/aromatic polyamides include poly(tetramethylenediamine-co-isophthalic acid) ("nylon-4,I"), polyhexamethylene isophthalamide ("nylon-6,I"), polyhexamethylene terephthalamide ("nylon-6,T"), poly (2,2,2-trimethyl hexamethylene terephthalamide), poly(m-xylylene adipamide) ("nylon-MXD,6"), poly(p-xylylene adipamide), poly(hexamethylene terephthalamide), poly(dodecamethylene terephthalamide), and polyamide-MXD,I.

Representative polyamides of the type that may be formed by the polycondensation of one or more amino acids (including the ring opening of lactams) include poly(4-aminobutyric acid) ("nylon-4"), poly(6-aminohexanoic acid) ("nylon-6" or "poly(caprolactam)"), poly(7-aminoheptanoic acid) ("nylon-7"), poly(8-aminooctanoic acid) ("nylon-8"), poly(9-aminononanoic acid) ("nylon-9"), poly(10-aminodecanoic acid) ("nylon-10"), poly(11-aminoundecanoic acid) ("nylon-11"), and poly(12-aminododecanoic acid) ("nylon-12").

Representative copolyamides include copolymers based on a combination of the monomers used to make any of the foregoing polyamides, such as, nylon-4/6, nylon-6/6, nylon-6/9, nylon-6/12, caprolactam/hexamethylene adipamide copolymer ("nylon-6,6/6"), hexamethylene adipamide/caprolactam copolymer ("nylon-6/6,6"), trimethylene adipamide/hexamethylene azelaiamide copolymer ("nylon-trimethyl 6,2/6,2"), hexamethylene adipamide-hexamethylene-azelaiamide caprolactam copolymer ("nylon-6,6/6,9/6"), hexamethylene adipamide/hexamethylene-isophthalamide ("nylon-6,6/6,I"), hexamethylene adipamide/hexamethyleneterephthalamide ("nylon-6,6/6,T"), nylon-6,T/6,I, nylon-6/MXD,T/MXD,I, nylon-6,6/6,10, and nylon-6,I/6,T.

Conventional nomenclature typically lists the major constituent of a copolymer before the slash ("/") in the name of a copolymer; however, in this application the constituent listed before the slash is not necessarily the major constituent unless specifically identified as such. For example, unless the application specifically notes to the contrary, "nylon-6/6,6" and "nylon-6,6/6" may be considered as referring to the same type of copolyamide.

Polyamide copolymers may include the most prevalent polymer unit in the copolymer (e.g., hexamethylene adipamide as a polymer unit in the copolymer nylon-6,6/6) in mole percentages ranging from any of the following: at least about 50%, at least about 60%, at least about 70%, at least about 80%, and at least about 90%, and the ranges between any of the forgoing values (e.g., from about 60 to about 80%); and may include the second most prevalent polymer unit in the copolymer (e.g., caprolactam as a polymer unit in the copolymer nylon-6,6/6) in mole percentages ranging from any of the following: less than about 50%, less than about 40%, less than about 30%, less than about 20%, less than about 10%, and the ranges between any of the forgoing values (e.g., from about 20 to about 40%).

Useful polyamides include those that are approved by the controlling regulating agency (e.g., the U.S. Food and Drug Agency) for either direct contact with food and/or for use in a food packaging film, at the desired conditions of use.

### Polyesters

Useful polyesters include those made by: 1) condensation of polyfunctional carboxylic acids with polyfunctional alcohols, 2) polycondensation of hydroxycarboxylic acid, and 3) polymerization of cyclic esters (e.g., lactone).

Exemplary polyfunctional carboxylic acids (and their derivatives such as anhydrides or simple esters like methyl esters) include aromatic dicarboxylic acids and derivatives (e.g., terephthalic acid, isophthalic acid, dimethyl terephthalate, dimethyl isophthalate) and aliphatic dicarboxylic acids and derivatives (e.g., adipic acid, azelaic acid, sebacic acid, oxalic acid, succinic acid, glutaric acid, dodecanoic diacid, 1,4-cyclohexane dicarboxylic acid, dimethyl-1,4-cyclohexane dicarboxylate ester, dimethyl adipate). Useful dicarboxylic acids also include those discussed above in the polyamide section. As is known to those of skill in the art, polyesters may be produced using anhydrides and esters of polyfunctional carboxylic acids.

Exemplary polyfunctional alcohols include dihydric alcohols (and bisphenols) such as ethylene glycol, 1,2- propanediol, 1,3-propanediol, 1,3 butanediol, 1,4-butanediol, 1,4-cyclohexanedimethanol, 2,2-dimethyl-1,3-propanediol, 1,6-hexanediol, poly(tetrahydroxy-1,1'-biphenyl, 1,4-hydroquinone, and bisphenol A.

Exemplary hydroxycarboxylic acids and lactones include 4-hydroxybenzoic acid, 6-hydroxy-2-naphthoic acid, pivalolactone, and caprolactone.

Useful polyesters include homopolymers and copolymers. These may be derived from one or more of the constituents discussed above. Exemplary polyesters include poly(ethylene terephthalate) ("PET"), poly(butylene terephthalate) ("PBT"), and poly(ethylene naphthalate) ("PEN"). If the polyester includes a mer unit derived from terephthalic acid, then such mer content (mole %) of the diacid of the polyester may be at least about any the following: 70, 75, 80, 85, 90, and 95 %.

Useful polyesters may be derived from lactone polymerization; these include, for example, polycaprolactone and polylactic acid.

The polyester may be thermoplastic. The polyester (e.g., copolyester) of the film may be amorphous, or may be partially crystalline (semi-crystalline), such as with a crystallinity of at least about, or at most about, any of the following weight percentages: 10, 15, 20, 25, 30, 35, 40, and 50%.

### Film Thickness and Layers

The film comprising the photothermic material (i.e., the film) may have any total thickness as long as it provides the desired properties (e.g., free shrink, shrink tension, flexibility, Young's modulus, optics, strength, barrier) for the given application of expected use. The film may have a thickness of less than about any of the following: 0.51, 0.25, 0.13, 0.10, 0.08, 0.05, 0.04, 0.03, 0.025 mm (20 mils, 10 mils, 5 mils, 4 mils, 3 mils, 2 mils, 1.5 mils, 1.2 mils, and 1 mil). The film may also have a thickness of at least about any of the following: 0.0064, 0.0076, 0.0089, 0.010, 0.011, 0.013, 0.015, 0.019, 0.020, 0.029, 0.025, 0.030, 0.036, 0.038, 0.051, 0.076, 0.13 mm (0.25 mils, 0.3 mils, 0.35 mils, 0.4 mils, 0.45 mils, 0.5 mils, 0.6 mils, 0.75 mils, 0.8 mils, 0.9 mils, 1 mil, 1.2 mils, 1.4 mils, 1.5 mils, 2 mils, 3 mils, and 5 mils).

The film may be monolayer or multilayer. The film may comprise at least any of the following number of layers: 1, 2, 3, 4, and 5. The film may comprise at most any of the following number of layers: 20, 15, 10, 9, 7, 5, 3, 2, and 1. The term "layer" refers to a discrete film component which is coextensive with the film and has a substantially uniform composition. Any of the layers of the film may have a thickness of at least about any of the following: 0.0013, 0.0025, 0.0051, 0.013, 0.025, 0.051, 0.076 mm (0.05, 0.1, 0.2, 0.5, 1, 2, and 3 mil). Any of the layers of the film may have a thickness of at most about any of the following: 0.13, 0.051, 0.025, 0.013 mm (0.5, 2, 1, and 0.5 mils). Any of the layers of the film may have a thickness as a percentage of the total thickness of the film of at least about any of the following values: 1, 3, 5, 7, 10, 15, 20, 30, 40, 50, 60, 70, 80, and 90 %. Any of the layers of the film may have a thickness as a percentage of the total thickness of the film of at most about any of the following values: 90, 80, 50, 40, 35, 30, 25, 20, 15, 10, and 5 %

The film may comprise one or more barrier layers, one or more tie layers, one or more heat seal layers, an outside layer, an inside layer, a shrink layer, one or more abuse layers, and/or one or more bulk or core layers. Below are some examples of combinations in which the alphabetical symbols designate the layers. Where the film representation below includes the same letter more than once, each occurrence of the letter may represent the same composition or a different composition within the class that performs a similar function.
C/D, E, D/E, C/E, C/D/E, C/D/D/E, C/A/E, C/A/E, C/B/A/E, C/B/A/B/E, C/B/A/B/D/E, C/B/A, C/A, A/E, E/B/A, C/D/B/A, E/A/E, A/B/D/E, C/B/A/B/C, C/B/A/B/E, CB/A/B/D/E, C/D/B/A/B/E, C/D/B/A/B/D/E, C/B/A/B/C, C/B/A/B/E, C/B/A/B/D/E, C/D/B/A/B/E, C/D/B/A/B/D/E
"A" is a barrier layer, as discussed below.
"B" is a tie layer, as discussed below.
"C" is a heat seal layer (i.e., sealant layer), that is, a layer adapted to facilitate the heat-sealing of the film to itself or to another object, such as a substrate, as is known in the art.
"D" may be a core layer, a bulk layer, and/or a shrink layer. The term "shrink layer" refers to an internal layer having a composition, configuration, and thickness such that the layer has significant effect in inducing compatible shrinkage of the overall multilayer film structure. The relative thickness of a shrink layer may be selected as sufficient relative to that of the overall film thickness so that the activation of the shrink characteristic of the shrink layer may essentially control the shrinkage of the entire multilayer film.
"E" is an outside (i.e., abuse or print side) layer. The film may support a printed image on an outside layer. The film may incorporate a printed image on an internal layer, for example by trap printing as discussed below.

Useful films that may be modified to incorporate photothermic material as set forth in this Application are described in the following: U.S. Patents 4,514,465 to Schoenberg; 4,532,189 to Mueller; 4,551,380 to Schoenberg; 4,590,124 to Schoenberg; 4,643,943 to Schoenberg; 4,724,185 to Shah; 4,726,984 to Shah; 4,755,419 to Shah; 5,023,143 to Nelson; 5,658,625 to Bradfute et al; 5,543,223 to Shah; 5,897,941 to Shah; 6,296,947 to Shah; 6,423,421 to Banaszak et al; 6,479,138 to Childress; and 6,579,621 to Shah.

### Barrier Layer

The film may comprise one or more barrier polymers. A "barrier polymer" is a polymer that markedly decreases the transmission rate of a specified gas through a film incorporating the polymer, relative to a comparable film not incorporating the polymer. Thus, the barrier polymer for a specified gas imparts enhanced barrier attributes to the film relative to the specified gas. When the term "barrier polymer" is used in this application without reference to a specified gas, it is understood that the term may be in reference to any of water vapor, oxygen, and/or carbon dioxide gases.

For example, an "oxygen barrier polymer" markedly decreases the oxygen gas transmission rate through a film incorporating the oxygen barrier polymer, because the oxygen barrier polymer imparts enhanced oxygen barrier attributes to the film. If the barrier polymer is effective for water vapor, then the barrier polymer may be considered a "water vapor barrier polymer." A barrier polymer that is effective as a barrier for one type of gas may also be effective as a barrier to one or more other gases. For example, a barrier polymer that is effective for oxygen may also be effective for carbon dioxide, such that the same polymer may be considered an oxygen barrier polymer and a carbon dioxide barrier polymer.

If the film is multilayered, then the one or more layers of the film that incorporate one or more barrier polymers in an amount sufficient to notably decrease the transmission rate of a specified gas through the film may be considered "barrier layers" with respect to the specified gas. If the film is monolayer and incorporates one or more barrier polymers, then the monolayer film itself may be considered a "barrier layer." For example, if a layer comprises an oxygen barrier polymer, then the layer may be considered an oxygen barrier layer.

The film or a barrier layer of the film may comprise one or more barrier polymers in an amount of at least about, or less than about, any of the following: 10%, 20%, 30%, 40%, 50%, 60%, 70%, 80%, 90%, 95%, 97%, 98%, 99%, and 99.5%, based on the weight of the film or the barrier layer, respectively.

Exemplary oxygen barrier polymers include: EVOH, PVOH, PVdC, polyalkylene carbonate, polyester (e.g., PET, PEN), polyacrylonitrile ("PAN"), and polyamide. Several of these polymers were discussed above in more detail.

### Oxygen Transmission

The film may have an oxygen transmission rate taken at a time selected from before the non-ionizing radiation exposure step and after the non-ionizing radiation exposure step of at most about, and/or at least about, any of the following values: 20,000; 10,000; 1,000; 500; 400; 300; 200; 150; 100; 50; 45; 40; 35; 30; 25; 20; 15; 10; and 5 cubic centimeters (at standard temperature and pressure) per square meter per day per 1 atmosphere of oxygen pressure differential measured at 0% relative humidity and 23°C. All references to oxygen transmission rate in this application are measured at these conditions according to ASTM D-3985.

The film may have an oxygen transmission rate after the non-ionizing radiation exposure step that is no higher than the oxygen transmission rate of the film immediately before the radiation exposure step plus about any of the following values: 10; 50; 100; 500; 1,000; 3,000; 5,000; 8,000; 10,000; 15,000; and 20,000 cubic centimeters (at standard temperature and pressure) per square meter per day per 1 atmosphere of oxygen pressure differential measured at 0% relative humidity and 23°C. For example, the exposing step may not increase the oxygen transmission rate of the film by more than any of the values of the previous sentence.

### Tie Layer

A tie layer (e.g., a second layer) is a layer directly adhered (i.e., directly adjacent) to first and third layers, and has the primary function of improving the adherence of the first layer to the third layer. For example, the film may include one or two tie layers directly adhered to a barrier layer and/or one or two tie layers directly adhered to a layer comprising photothermic material.

A tie layer may comprise one or more polymers having grafted polar groups so that the polymer is capable of enhanced bonding to polar polymers such as EVOH. Useful polymers for tie layers include ethylene/unsaturated acid copolymer, ethylene/unsaturated ester copolymer, anhydride-modified polyolefin, polyurethane, and mixtures thereof. Further exemplary polymers for tie layers include one or more of the polyamides previously discussed; ethylene/vinyl acetate copolymer having a vinyl acetate content of at least about any of the following: 3, 6, and 15 weight %; ethylene/methyl acrylate copolymer having a methyl acrylate content of at least about 20 weight %; anhydride-modified ethylene/methyl acrylate copolymer having a methyl acrylate content of at least about any of the following: 5, 10, 15, and 20 weight %; and anhydride-modified ethylene/alpha-olefin copolymer, such as an anhydride grafted LLDPE.

Modified polymers or anhydride-modified polymers include polymers prepared by copolymerizing an unsaturated carboxylic acid (e.g., maleic acid, fumaric acid), or a derivative such as the anhydride, ester, or metal salt of the unsaturated carboxylic acid with -- or otherwise incorporating the same into - an olefin homopolymer or copolymer. Thus, anhydride-modified polymers have an anhydride functionality achieved by grafting or copolymerization.

### Photothermic Material

The film may comprise at least about 0.01 wt. % of one or more photothermic materials, such as any of those discussed below. A "photothermic material" as used herein is a material that is capable of absorbing non-ionizing radiation having a wavelength of from about 200 nm to about 700 nm, and as a result of the absorption, undergoing a radiationless photophysical process that results in the excited electron states reverting to ground state with the generation of heat energy. A photothermic material may also undergo a radiative photophysical process as a result of the absorption of the non-ionizing radiation, as long as the photothermic material also undergoes the radiationless photophysical process that results in the excited electron states reverting to ground state with the generation of heat energy.

The photothermic material may be capable of absorbing non-ionizing radiation having a wavelength of at least about, and/or at most about any of the following wavelengths, and as a result of the absorption, undergoing the radiationless photophysical process that results in the excited electron states reverting to ground state with the generation of heat energy: 200, 210, 250, 280, 290, 300, 310, 315, 320, 330, 340, 345, 350, 355, 360, 365, 370, 375, 380, 390, 400, 410, 470, 475, 500, 510, 560, 570, 620, 630, and 700 nm.

Additionally, the photothermic material may be incapable of absorbing non-ionizing radiation having a wavelength of at least about, and/or at most about, any of the wavelengths in the preceding sentence to undergo a radiationless photophysical process that results in the excited electron states reverting to ground state with the generation of heat energy. For example, the photothermic material may be incapable of absorbing non-ionizing radiation having wavelengths of at least about 400 nm and at most about 700 nm to undergo a radiationless photophysical process that results in the excited electron states reverting to ground state with the generation of heat energy.

If it is desirable that the film comprising the photothermic material have a colored appearance, then the photothermic material may be selected from one or more suitable dyes and/or pigments that may provide color to the film while also providing the heat to activate the shrink characteristic of the film upon exposure to an effective amount of non-ionizing radiation in the visible light spectrum.

The photothermic material may be inorganic or organic (e.g., organometallic) in nature, such as any of the inorganic or organic photothermic materials discussed below. The photothermic material may comprise a blend of inorganic and organic photothermic materials. The photothermic material may be in the form of photothermic particles, as discussed below.

Useful photothermic materials are those capable of generating sufficient heat energy to activate the shrink characteristic of the film to a desired level without requiring a radiation dose that causes an unacceptable degradation or change in a film property.

The photothermic material, for example the photothermic particles, may comprise material having a photonic band gap at 68°F of at least about any of the following values: 3.1 eV and 3.2 eV. The photothermic material may comprise such material with any of the forgoing photonic band gap characteristics in at least about, and/or at most about any of the following amounts: 10, 20, 30, 40, 50, 60, 70, 80, 90, 95, 99, and 100 weight % based on the weight of the photothermic material or the photothermic particles. The photothermic material may consist essentially of, or consist of, material having any of the forgoing photonic band gap characteristics.

### Inorganic Photothermic Material

The photothermic material, for example the photothermic particles, may comprise one or more inorganic photothermic materials discussed below. An "inorganic photothermic material" is a photothermic material that is an inorganic chemistry material (e.g., element, compound, alloy). The photothermic material, for example the photothermic particles, may comprise inorganic photothermic material in at least about, and/or at most about any of the following amounts: 10, 20, 30, 40, 50, 60, 70, 80, 90, 95, 99, and 100 weight %, based on the weight of the photothermic material or the photothermic particles. The photothermic material may consist essentially of, or consist of, inorganic photothermic material.

Inorganic photothermic materials include titanium dioxide (TiO₂), zinc oxide (ZnO), iron oxide (Fe₂O₃, Fe₃O₄), tin oxide (SnO₂), zinc sulfide (ZnS), gallium nitride (GaN), gallium disulfide (GaS₂), cuprous chloride (CuCl), copper aluminum disulfide (CuAlS₂), and silicon carbide (SiC). The photothermic materials, for example the photothermic particles, may comprise any one of these materials, or any one or more of these materials, in at least about, and/or at most about any of the following amounts: 10, 20, 30, 40, 50, 60, 70, 80, 90, 95, 99, and 100 weight %, based on the weight of the photothermic material or the photothermic particles. The photothermic material may consist essentially of, or consist of, any one of these materials, or any one or more of these materials.

The photothermic material, for example the photothermic particles, may comprise semiconductor compound and/or alloy in at least about, and/or at most about any of the following amounts: 10, 20, 30, 40, 50, 60, 70, 80, 90, 95, 99, and 100 weight %, based on the weight of the photothermic material or the photothermic particles. The photothermic material may consist essentially of, or consist of, a semiconductor compound and/or alloy.

### Organic Photothermic Material

The photothermic material, for example the photothermic particles, may comprise organic photothermic material, such as any of those discussed below. An "organic photothermic material" means a photothermic material that is an organic chemistry carbon-containing compound (e.g, an organometallic material). The photothermic material, for example the photothermic particles, may comprise organic photothermic material in at least about, and/or at most about any of the following amounts: 10, 20, 30, 40, 50, 60, 70, 80, 90, 95, 99, and 100 weight %, based on the weight of the photothermic material or the photothermic particles. The photothermic material may consist essentially of, or consist of, organic photothermic material.

The photothermic material, for example the photothermic particles, may comprise any one of the organic photothermic materials, or any organic photothermic material from one of the classes of UV-absorbers listed below, in at least about, and/or at most about any of the following amounts: 10, 20, 30, 40, 50, 60, 70, 80, 90, 95, 99, and 100 weight %, based on the weight of the photothermic material or the photothermic particles. Also, the photothermic material may comprise any combination of one or more, two or more, three or more, at most four, at most three, and at most two of any of the organic photothermic materials in any of the forgoing amounts. The photothermic material may comprise organic photothermic material from any combination of one or more, two or more, three or more, at most four, at most three, and at most two of the UV-absorber classes listed below in any of the forgoing amounts.

Exemplary organic photothermic materials include compounds in the benzophenone class of UV absorbers, such as 2-Hydroxy-4-methoxy benzophenone (e.g., Cyasorb UV 9) and 2-Hydroxy-4-octoxy benzophenone (e.g., Cyasorb 531 and Ciba® CHIMASSORB® 81).

Exemplary organic photothermic materials include compounds in the benzotriazole class of UV absorbers, such as 2-(2'-Hydroxy-3'-tert-butyl-5'-methylphenyl)-5-chlorobenzotriazole, 2-(2H-hydroxy-3-5-Di-tert-Amyllphenyl)benzotriazole, 2-(2-Hydroxy-5-tert-octylphenyl) benzotriazole, 2-(2H-hydroxy-3-5-Di-tert-Butylphenyl)benzotriazole, 2-(2-Hydroxy-5-methyl phenyl) benzotriazole, and 2-[2-Hydroxy-3,5-di-(1,1-dimethylbenzyl)phenyl]-2H-benzotriazole.

Exemplary organic photothermic materials include *p*-Aminobenzoic acid (PABA), Avobenzone, 3-Benzylidene camphor, Benzylidene camphor sulfonic acid, Bisymidazylate, Camphor benzalkonium methosulfate, Cinoxate, Diethylamino hydroxybenzoyl hexyl benzoate, Diethylhexyl butamido triazone, Dimethicodiethylbenzal malonate (Parsol SLX), Dioxybenzone, Drometrizole trisiloxane, Ecamsule, Ensulizole, Homosalate, Isoamyl *p-*methoxycinnamate, 4-Methylbenzylidene camphor, Menthyl anthranilate, Octocrylene, Octyl dimethyl PABA, Octyl methoxycinnamate, Octyl salicylate, Octyl triazone, Oxybenzone, PEG-25 PABA, polyacrylamidomethyl benzylidene camphor, Sulisobenzone, bis-ethylhexyloxyphenol methoxyphenol triazine (e.g., Tinosorb S), methylene bis-benzotriazolyl tetramethylbutylphenol (e.g., Tinosorb M), and Trolamine salicylate.

Exemplary organic photothermic materials also include compounds available from Ciba Giegy under the Ciba® TINUVIN® trademarks, for example, Ciba® TINUVIN® P, Ciba® TINWIN® 213, Ciba® TINUVIN® 234, Ciba® TINUVIN® 326, Ciba® TINUVIN® 327, Ciba® TINUVIN® 328, and Ciba® TINUVIN® 571 trademarks.

### Photothermic Particles

The photothermic material may have a particle configuration, that is, the photothermic material may be in the form of discrete, amassed units of the material that are larger than a single atom or molecule of the material. A particle configuration includes, for example, particles surrounded by the one or more thermoplastic polymers of the film, for example as colloidal particles in a colloid solution. In a particle configuration, the photothermic material may be referred to as "photothermic particles." The photothermic material may comprise photothermic particles in at least about, and/or at most about, any of the following amounts: 40, 50, 60, 70, 80, 90, 95, and 100 % based on the weight of the photothermic material.

The photothermic particles may have an average size in the longest dimension of at most about, and/or at least about, any of the following: 25 micron, 20 micron, 15, micron, 10 micron, 5 micron, 2 micron, 1 micron, 800 nm, 500 nm, 200 nm, 100 nm, 80 nm, 70 nm, 50 nm, 40 nm, 30 nm, 20 nm, 10 nm, 5 nm, 3 nm, 2 nm, and 1 nm.

The photothermic particles may have an average size in the shortest dimension of at least about, and/or at most about, any of the following values: 0.5 nm, 0.8 nm, 1 nm, 2, nm, 3 nm, 4 nm, 5 nm, 8, 10, 15, 20, 30, 50, 60, 80, 100, 105, 110, 150, 200, 500, 800, and 900 nm.

The photothermic particles may have an average size in at least one dimension (e.g., the longest dimension and/or the shortest dimension) of at least about, and/or at most about, any of the following: 0.8 nm, 1 nm, 2 nm, 3 nm, 5 nm, 10 nm, 15 nm, 20 nm, 30 nm, 50 nm, 100 nm, 200 nm, 500 nm, and 800 nm. The dimensions of the particles may be estimated from transmission electron microscope ("TEM") images.

The photothermic particles may have an average aspect ratio (i.e., the ratio of the average largest dimension to the average smallest dimension of the particles) of from about 10 to about 30,000. The aspect ratio for the particles may be taken as the length (largest dimension) to the thickness (smallest dimension) of the particle or as the length (largest dimension) to the diameter (smallest dimension) of the particle. Useful aspect ratios for the photothermic particles include at least about any of the following values: 1, 3, 5, 8, 10; 20; 25; 200; 250; 1,000; 2,000; 3,000; and 5,000; and at most about any of the following values: 25,000; 20,000; 15,000; 10,000; 5,000; 3,000; 2,000; 1,000; 250; 200; 25; 20; 10; and 1.

The index of refraction of the photothermic particles may be substantially similar to that of the film medium (e.g., the one or more thermoplastic polymers) in which the particles are dispersed, so that the film will be optically transparent. If the index of refraction of the photothermic particles is substantially different from that of the film medium, then optical light may be scattered so that the film appears white or opaque.

However, even if the film medium and the photothermic particles have different indices of refraction, the film may nevertheless not appear white or opaque (i.e., may be transparent) if the incorporated photothermic particles are at most about 100 nm in the longest dimension, since visible light is not diffracted by the material interfaces of the photothermic particles in that size range. Accordingly, the photothermic particles may be of an average size small enough - for example, smaller than a quarter wavelength of visible light or less than 100 nm in any dimension -- to maintain optical transparency of the film comprising the photothermic particles. The photothermic particles may have a size greater than 100 nm (e.g., from about 1 to about 25 microns) in at least one dimension, for example, if transparency of the film comprising the photothermic particles is not important, and, for example, if some amount of translucency or opaqueness is acceptable.

The photothermic material, for example, the photothermic particles, may be essentially non-absorptive of visible light radiation, a phrase that means that the particle absorbs less than about 20% of the visible light radiation energy to which it is exposed at 20°C (68°F).

### Photothermic Material in the Film

The photothermic material may be dispersed in the film such that the material does not display a particle configuration within the film. For example, an organic photothermic material may not display a particle configuration if it is in solution in the polymer medium of the film. The photothermic material may be incorporated into the molecular structure of the one or more thermoplastic polymers of the film, for example, by grafting the photothermic material onto or copolymerizing the photothermic material with a thermoplastic polymer.

The photothermic material in the film may comprise at most about any of the following amounts of photothermic particles: 30, 20, 10, 5, 1, and 0 % based on the weight of the photothermic material. The photothermic material may be substantially devoid of photothermic particles.

The photothermic material may be dispersed in the film, for example, so that the photothermic material (i.e., any of the the photothermic particles, the inorganic photothermic material, and the organic photothermic material) may be evenly dispersed throughout the film, whether monolayer or multilayer. Alternatively, one or more layers of the film may comprise photothermic material while one or more other layers of the film may be substantially devoid of photothermic material. For example, the photothermic material may be dispersed in one or more shrink layers of the film, while all layers other than the shrink layers may be essentially devoid of photothermic material. The term "dispersed" includes a molecular dispersion such as a dissolution.

Any of the film layers discussed above may comprise photothermic material, or may be essentially devoid of photothermic material.

For example, at least about, and/or at most about, any of the following numbers of film layers may comprise photothermic material: 1, 2, 3, 4, 5, 6, 7, 8, 9, 10, and 11. Also by way of example, at least about, and/or at most about, any of the following numbers of film layers may be essentially devoid of photothermic material: 1, 2, 3, 4, 5, 6, 7, 8, 9, 10, and 11.

The film, or a layer of the film, may comprise at least about any of the following amounts of photothermic material: 0.01%, 0.05%, 0.1%, 0.5%, 1%, 1.5%, 2%, 2.5%, 3%, 4%, 5%, 8%, 10%, 12%, 15%, 20%, 25%, 30%, 35%, and 40% based on the weight of the film, or the weight of the layer incorporating the photothermic material, respectively. The film, or a layer of the film, may comprise at most about any of the following amounts of photothermic material: 50%, 40%, 30%, 20%, 15%, 10%, 8%, 6%, 5%, 4%, 3%, 2%, 1%, 0.5%, 0.1%, and 0.05% based on the weight of the film, or the weight of the layer, respectively. The film, or one or more layers of the film, may comprise one or more organic photothermic materials, and/or one or more inorganic photothermic materials, or blends or mixtures of inorganic and organic photothermic materials, in any of the forgoing amounts. The film, or one or more layers of the film, may comprise UV photothermic particles in any of the foregoing amounts.

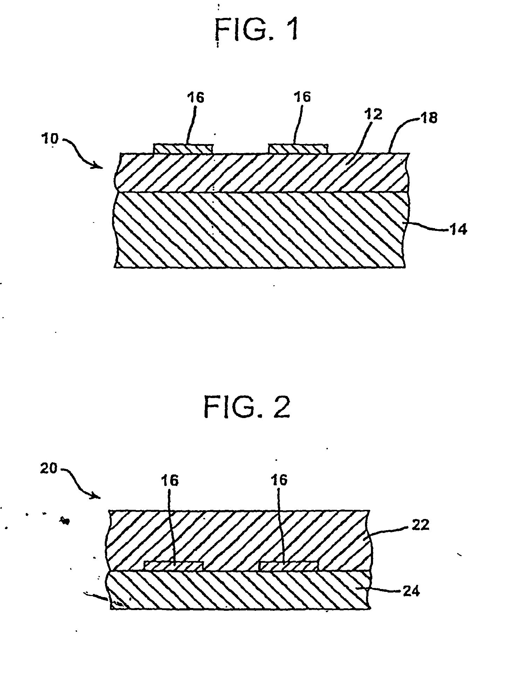

In one embodiment, film 10 (Figure 1), which comprises outer layer 12 and one or more other layers 14, may comprise photothermic material by incorporating photothermic material in one or more selected regions of the film, such as one or more discontinuous regions 16 supported by the outer layer 12 of film 10, in which case the one or more discontinuous regions 16 may form at least a portion of the outer surface 18 of film 10.

In another embodiment, film 20 (Figure 2), which comprises one or more layers 22 and one or more other layers 24, may comprise photothermic material by incorporating photothermic material in one or more selected regions of the film, such as one or more discontinuous regions 16 internal to the film structure (e.g., between layers 22 and 24).

In either embodiment, the one or more discontinuous regions 16 may comprise any of the types and amounts of photothermic material discussed above (but in relation to the weight of the one or more discontinuous regions). The one or more discontinuous regions 16 may comprise polymer (e.g., thermoplastic polymer), such as one or more of any of the polymers described in this application in any of the percentage amounts described in this application (but in relation to the weight of the one or more discontinuous regions). The one or more discontinuous regions 16 may comprise one or more printing inks or varnishes.

The one or more discontinuous regions 16 may be in the shape of a dot, a strip, or other arrangement to form a desired area shape on the surface 18 of the film outer layer 12. The one or more discontinuous regions 16 may be deposited onto the film outer layer, for example, by "printing" (i.e., using a print application method) to apply a mixture comprising polymer resin and photothermic material onto the film outer layer in one or more selected regions. Useful printing methods for applying the mixture include one or more of printing methods known to those of skill in the art, such as screen, gravure, flexographic, roll, metering rod coating, ink-jet, digital, and toner print techniques.

Discontinuous regions 16 that have been deposited on an outer layer may subsequently become internal to the film structure by laminating or otherwise depositing one or more additional film layers over the discontinuous regions that incorporate photothermic material. For example, just as a printed image may be "trap printed" by laminating a film over the printed image, so too can discontinuous regions 16 be trapped by an outer film layer.

The discontinuous regions 16 incorporating photothermic material may take the form of one or more bands (e.g., "stripes" or "lanes") of polymeric resin, as described in U.S. Patent 5,110,530 to Havens. Such bands may incorporate the dispersed photothermic material rather than or in addition to pigment. Such bands may also be internal or external to the film layer structure.

A layer of the film comprising photothermic material may have a thickness of at least about, and/or at most about, any of the following percentages based on the total thickness of the film: 90, 80, 70, 60, 50, 40, 30, 20, 15, 10, 5, and 1%.

A layer comprising photothermic material may be an outer layer of the film. An outer layer may be an "outside layer" of the film (i.e., an outer layer adapted or designed to face to the outside of a package incorporating the film) or an "inside layer" of the film (i.e., an outer layer adapted or designed to face the inside of a package incorporating the film). If the film comprises only one layer, then the one layer may be considered an "outer layer." A layer comprising photothermic material may be an inner or interior layer of the film. An inner or interior layer of the film is between two outer layers of the film.

### Addititives

One or more layers of the film may include one or more additives useful in thermoplastic films, such as, antiblocking agents, slip agents, antifog agents, colorants, pigments, dyes, flavorants, antimicrobial agents, meat preservatives, antioxidants, fillers, radiation stabilizers, and antistatic agents.

### Modulus of the Film

The film preferably exhibits a Young's modulus sufficient to withstand the expected handling and use conditions. Young's modulus may be measured in accordance with one or more of the following ASTM procedures: D882; D5026; D4065, each of which is incorporated herein in its entirety by reference. The film may have a Young's modulus - measured either before and/or after the exposing step discussed below -- of at least about - or at most about -- any of the following: 10,000; 15,000; 25,000; 40,000; 70,000; 80,000; 90,000; 100,000; 150,000; 200,000; 250,000; 300,000; and 350,000 pounds/square inch, measured at a temperature of 73°F. Useful ranges for Young's modulus for the film include from about 10,000 to about 300,000 psi, from about 15,000 to about 150,000 psi, and from about 15,000 to about 70,000 psi, measured at a temperature of 100°C (212°F).

### Appearance Characteristics of the Film

The film comprising the photothermic material may have low haze characteristics. Haze is a measurement of the transmitted light scattered more than 2.5° from the axis of the incident light. Haze is measured against the outside layer of the film. As previously discussed, the "outside layer" is the outer layer of the film that will be adjacent the area outside of a package comprising the film. Haze is measured according to the method of ASTM D 1003, which is incorporated herein in its entirety by reference. All references to "haze" values in this application are by this standard. The haze of the film - measured either before and/or after the exposing step discussed below -- may be at most about, and/or at least about, any of the following values: 30%, 25%, 20%, 15%, 10%, 8%, 5%, and 3%. The film may incorporate photothermic particles having a largest dimension of less than 100 nm in order that the photothermic particles avoid contributing to the haze of the film.

The film comprising the photothermic material may have a gloss (i.e., specular gloss) as measured against the outside layer - measured either before and/or after the exposing step discussed below -- of at least about, and/or at most about, any of the following values: 40%, 50%, 60%, 63%, 65%, 70%, 75%, 80%, 85%, 90%, and 95%. These percentages represent the ratio of light reflected from the sample to the original amount of light striking the sample at the designated angle. All references to "gloss" values in this application are in accordance with ASTM D 2457 (45° angle), which is incorporated herein in its entirety by reference.

The film comprising the photothermic material may be transparent (at least in the non-printed regions) so that a packaged article may be visible through the film. "Transparent" means that the film transmits incident light with negligible scattering and little absorption, enabling objects (e.g., the packaged article or print) to be seen clearly through the film under typical viewing conditions (i.e., the expected use conditions of the material). The regular transmittance (i.e., clarity) of the film - measured either before and/or after the exposing step discussed belowmay be at least about, and/or at most about, any of the following values: 30%, 40%, 50%, 65%, 70%, 75%, 80%, 85%, and 90%, measured in accordance with ASTM D1746. All references to "regular transmittance" values in this application are by this standard.

The total luminous transmittance (i.e., total transmittance) of the film comprising the photothermic material - measured either before and/or after the exposing step discussed below may be at least about, and/or at most about, any of the following values: 30%, 40%, 50%, 65%, 70%, 75%, 80%, 85%, and 90%, measured in accordance with ASTM D1003. All references to "total luminous transmittance" values in this application are by this standard.

The measurement of optical properties of plastic films, including the measurement of total transmission, haze, clarity, and gloss, is discussed in detail in Pike, LeRoy, "Optical Properties of Packaging Materials," Journal of Plastic Film & Sheeting, vol. 9, no. 3, pp. 173-80 (July 1993).

### Heat-Shrink Characteristic

The film comprising the photothermic material may have a free shrink at 185°F (85°C) in at least one direction (e.g., the machine direction or the transverse direction) and/or in both the machine and transverse directions of at least about, and/or at most about, any of the following: 5%, 7%, 10%, 15%, 25%, 30%, 40%, 45%, 50%, 55%, 60%, 70%, and 80%. Further, the film may have any of the preceding free shrink values measured at a temperature selected from any of 200°F, 220°F, 240°F, 260°F, 280°F, and 300°F.

The film may have unequal free shrink in both directions, that is differing free shrink in the machine and transverse directions. For example, the film may have a free shrink (185°F) in the machine direction of at least 40% and a free shrink (185°F) in the transverse direction of at least 25%. The film may not have a heat shrink characteristic in both directions. For example, the film may have a free shrink at 85°C (185°F) in one direction of less than about any of the following: 5%, 4%, 3%, 2% and 1%; or the film may have 0% free shrink at 85°C (185°F) in one direction. The free shrink of the film is determined by measuring the percent dimensional change in a 10 cm x 10 cm film specimen when subjected to selected heat (i.e., at a specified temperature exposure) according to ASTM D 2732, which is incorporated herein in its entirety by reference. All references to free shrink in this application are measured according to this standard.

As is known in the art, a heat-shrinkable film shrinks upon the application of heat while the film is in an unrestrained state. If the film is restrained from shrinking to some extentfor example by a packaged product around which the film shrinks -- then the tension of the heat-shrinkable film increases upon the application of heat. Accordingly, a heat-shrinkable film that has been exposed to heat so that at least a portion of the film is either reduced in size (unrestrained) or under increased tension (restrained) is considered a heat-shrunk (i.e., heat-contracted) film.

The film may exhibit a shrink tension at 85°C (185°F) in at least one direction, and/or in at least both of the machine and transverse directions, of at least about, and/or at most about, any of the following: 0.35, 0.52, 0.69, 0.86, 10, 1.2, 14, 16, 17, 19, 21, 2.2, 2.4, 2.8, 3.1, 3.5, 3.8, 4.1 MPa (50 psi, 75 psi, 100 psi, 125 psi, 150 psi, 175 psi, 200 psi, 225 psi, 250 psi, 275 psi, 300 psi, 325 psi, 350 psi, 400 psi, 450 psi, 500 psi, 550 psi, and 600 psi). Further, the film may have any of the preceding shrink tensions measured at a temperature selected from any of 93, 104, 116, 127, 138, 149°C (200°F, 220°F, 240°F, 260°F, 280°F, and 300°F). The film may have unequal shrink tension in both directions, that is differing shrink tension in the machine and transverse directions. The film may not have a shrink tension in one or both directions. Shrink tension is measured at a specified temperature (e.g., 85°C (185°F)) in accordance with ASTM D 2838 (Procedure A), which is incorporated herein in its entirety by reference. All references to shrink tension in this application are by this standard.

The film may be annealed or heat-set to reduce the free shrink slightly or substantially; or the film may not be heat set or annealed once the oriented film has been quenched in order that the film will have a high level of shrink characteristic (e.g., heat shrinkability).

### Manufacturing the Film

The film may be manufactured by thermoplastic film-forming processes known in the art. The film may be prepared by extrusion or coextrusion utilizing, for example, a tubular trapped bubble film process or a flat film (i.e., cast film or slit die) process. The film may also be prepared by applying one or more layers by extrusion coating, adhesive lamination, extrusion lamination, solvent-borne coating, print flood coating, or by latex coating (e.g., spread out and dried on a substrate). A combination of these processes may also be employed. These processes are known to those of skill in the art.

In forming the resin mixture for the one or more film layers that comprise the photothermic material, the photothermic material may be mixed with polymer before the resin mixture is heated or melted for processing to form the film. This may help to disperse the photothermic material (e.g., the photothermic particles) in the polymer. Once mixed, the blend can be extruded and processed as discussed above.

The film may be oriented in either the machine (i.e., longitudinal), the transverse direction, or in both directions (i.e., biaxially oriented), for example, to enhance the strength, optics, and durability of the film. A web or tube of the film may be uniaxially or biaxially oriented by imposing a draw force at a temperature where the film is softened (e.g., above the vicat softening point; *see* ASTM 1525) but at a temperature below the film's melting point. The film may then be quickly cooled to retain the physical properties generated during orientation and to provide a heat-shrink characteristic to the film. The film may be oriented using, for example, a tenter-frame process or a bubble process. These processes are known to those of skill in the art, and therefore are not discussed in detail here. The orientation may occur in at least one direction by at least about, and/or at most about, any of the following ratios: 1.5:1, 2:1, 2.5:1, 3:1, 3.5:1 , 4:1, 5:1, 6:1, 7:1, 8:1, 9:1, 10:1, 12:1, and 15:1.

### Optional Energy Treatment

One or more of the layers of the film -- or at least a portion of the entire filmmay be cross-linked, for example, to improve the strength of the film. Cross-linking may be achieved by using chemical additives or by subjecting one or more film layers to one or more energetic radiation treatments -- such as ultraviolet, or ionizing radiation such as X-ray, gamma ray, beta ray, and high energy electron beam treatment -- to induce cross-linking between molecules of the irradiated material. Useful ionizing radiation dosages include at least about any of the following: 5, 7, 10, 15, 20, 25, 30, 35, 40, 45, and 50 kGy (kiloGray). Useful ionizing radiation dosages include less than about any of the following: 150, 130, 120, 110, 100, 90, 80, and 70 kGy. The dosage of the radiation utilized for crosslinking may be substantially devoid of UV light having a wavelength effective to activate the shrink characteristic of the film. The cross-linking may occur before the orientation process, for example, to enhance the film strength before orientation, or the cross-linking may occur after the orientation process.

It may be desirable to avoid irradiating a film layer comprising PVdC or a film layer comprising photothermic material. To that end, substrate layers may be extruded and irradiated, and the PVdC-containing layer and/or the photothermic particle containing layer (and subsequent layers) may then be applied to the irradiated substrate, for example, by an extrusion coating process.

All or a portion of one or two surfaces the film may be corona and/or plasma treated to change the surface energy of the film, for example, to increase the ability of print or a food product to adhere to the film. One type of oxidative surface treatment involves bringing the sealant film into the proximity of an O₂- or N₂-containing gas (e.g., ambient air) which has been ionized. Exemplary techniques are described in, for example, U.S. Patent Nos. 4,120,716 (Bonet) and 4,879,430 (Hoffman). The film may be treated to have a surface energy of at least about 0.034 J/m², preferably at least about 0.036 J/m², more preferably at least about 0.038 J/m², and most preferably at least about 0.040 J/m².

### Activating the Shrink Characteristic of the Film

The shrink characteristic of the film may be activated by exposure of the film to an effective amount of non-ionizing radiation, for example, an effective amount of radiation having a wavelength of from about 200 to about 700 nm. "Activating the shrink characteristic of the film" means that the film is exposed to conditions that cause one or more of: 1) the film to shrink by at least about 5% of the length in at least one direction (for example, if the film or film portion is unrestrained) or 2) the tension in the film to increase by at least about 50 psi in at least one direction (for example, if the film or film portion is restrained).

Accordingly, the film comprising photothermic material may be exposed to an amount of non-ionizing radiation energy effective for the photothermic material to generate heat to cause one or more of the following effects: 1) shrink the film by at least about 5% in at least one direction, for example, if the film or film portion is in an unrestrained state and 2) increase the tension in the film by at least about 50 pounds per square inch (psi) in at least one direction, for example if the film or film portion is in a restrained state.

The film may be exposed to an amount of non-ionizing radiation effective to shrink the film in at least one direction by at least about, and/or at most about, any of the following values: 7%, 10%, 15%, 20%, 30%, 40%, 50%, 60%, 70%, 80%, 90%, and 95%. The film may shrink in at least two directions (e.g., the machine and transverse directions) by any of the previous amounts. The film may shrink unequally in both directions, that is differing free shrink in the machine and transverse directions. The film may not shrink in both directions. For example, the film may shrink in one direction by less than about any of the following: 5%, 4%, 3%, 2% and 1%; or the film may not shrink in one direction as a result of the radiation exposing step.

The film may be exposed to an amount of non-ionizing radiation energy effective to increase the tension in the film in at least one direction by at least about, and/or at most about, any of the following values: 0.52, 0.69, 0.86, 1.04, 1.2, 1.4, 1.6, 1.7, 1.9, 2.1, 2.2, 3.5, 4.1, 4.8, 5.5, 6.9, 10.4 MPa (75 psi, 100 psi, 125 psi, 150 psi, 175 psi, 200 psi, 225 psi, 250 psi, 275 psi, 300 psi, 325 psi, 500 psi, 600 psi, 700 psi, 800 psi, 1,000 psi, and 1,500 psi). The film may have an unequal increase in shrink tension in both directions, that is differing shrink tension in the machine and transverse directions. The film may not have an increase in shrink tension in one or both directions.

The film may be exposed to an amount of non-ionizing radiation energy effective to shrink the film in at least one direction by at least about any of 5, 10, 15, 20, 25, 30, 40, 50, 60, and/or 80 percentage points more than the shrink value in the same direction obtainable by exposing a comparative film - which differs from the film only by lacking the photothermic material -- to the same amount of non-ionizing radiation under the same conditions. For example, a film comprising a photothermic material may be exposed to an amount of radiation energy effective to shrink the film by at least about 13 % (measured according to ASTM D 2732)
where exposure of a comparative film (lacking the photothermic material) to the same amount of non-ionizing radiation under the same conditions shrinks in the machine direction by 8 % (measured according to ASTM D 2732).

The film may be exposed to an amount of non-ionizing radiation energy effective to increase the tension in the film in at least one direction by at least about any of 0.35, 0.41, 0.48, 0.55, 0.69, 0.90, 1.0, 1.4, 1.7, 2.1, 2.4, 2.8 MPa (50, 60, 70, 80, 100, 130, 150, 200, 250, 300, 350, and/or 400 psi) more than the increase in shrink in the same direction obtainable by exposing a comparative film - which differs from the film only by lacking the photothermic material -- to the same amount of non-ionizing radiation under the same conditions. For example, a film comprising a photothermic material may be exposed to an amount of radiation energy effective to increase the shrink tension in the film by at least about 100 psi (measured according to ASTM 2838) where exposure of a comparative film (lacking the photothermic material) to the same amount of non-ionizing radiation under the same conditions increases the shrink tension in the machine direction by 50 psi (measured according to ASTM 2838).

The temperature of the film at the start of the non-ionizing radiation exposure step may be below the shrink initiation temperature of the film, that is, below the minimum temperature at which the shrink characteristic of the film is activated. The temperature of the film at the start of the non-ionizing radiation exposure step may be below the shrink initiation temperature of the film by at least about, and/or at most about, any of the following: 2.8, 5.6, 8.4, 11.2, 14, 16.8, 28.0, 39.2, 126, 56.0, 67.2, 78.4, 84.0, 89.6, 95.2, 100.8, 106.4, 112.0 and 123.2°C (5, 10, 15, 20, 25, 30, 50, 70, 90, 100, 120, 140, 150, 160, 170, 180, 190, 200, and 220°F). The temperature of the film at the start of the non-ionizing radiation exposure step may be at least about, and/or at most about, any of the following: -29, -23, -18, -15, -12, -9, -7, -4, -1, 10, 21, 32, 38, 49, 60, 66, 71, 77, 82, 88, 93, 104°C (-20, -10, 0, 5, 10, 15, 20, 25, 30, 50, 70, 90, 100, 120, 140, 150, 160, 170, 180, 190, 200, and 220°F). To achieve these temperatures, the film may be heated or cooled before the start of the non-ionizing radiation exposure step; for example, the film may be heated other than by radiation exposure. Such heating or cooling may occur, for example, by conduction or forced-convection, such as in a water bath or air tunnel.

The effective amount of non-ionizing radiation of the exposing step may comprise, consist of, or consist essentially of non-ionizing radiation having wavelengths of at most about, and/or at least about, any of the following: 200, 210, 250, 280, 290, 300, 310, 315, 320, 330, 340, 345, 350, 355, 360, 365, 370, 375, 380, 390, 400, 410, 470, 475, 500, 510, 560, 570, 620, 630, and 700 nm. The effective amount of non-ionizing radiation of the exposing step may be essentially devoid of non-ionizing radiation having wavelengths of at least about, and/or at most about, any of the wavelengths in the preceding sentence.

The effective amount of non-ionizing radiation energy of the exposing step may comprise radiation having wavelengths of at least about, and/or at most about, any of the wavelength ranges in the preceding paragraph in at least about, and/or at most about, any of the following amounts: 5, 10, 15, 20, 25, 30, 35, 40, 45, 50, 60, 70, 80, 90, and 95 % based on the total amount of non-ionizing radiation energy of the exposing step.

The effective amount of non-ionizing radiation energy may further comprise one or more of infrared light, microwave, and radiowave radiation in at least about, and/or at most about, any of the following amounts: 5, 10, 15, 20, 25, 30, 35, 40, 45, 50, 60, 70, 80, 90, and 95 % based on the total amount of non-ionizing radiation energy of the exposing step. The non-ionizing radiation of the exposing step may be essentially devoid of any one or more of the following:
infrared light, microwave, and radiowave radiation. For example, the non-ionizing radiation of the exposing step may be essentially devoid of infrared light. Also, the effective amount of non-ionizing radiation energy may be essentially devoid of microwave energy in the 2.54 nm wavelength range in order to avoid exciting (heating) water or water-bearing product (e.g., food) that may be enclosed in a package comprising the film.

The radiation energy amount (e.g., the surface dosage for the non-ionizing radiation) of the exposing step may be delivered within a duration of at most about, and/or at least about, any of the following: 900, 500, 300, 100, 80, 50, 30, 25, 20, 15, 10, 9, 8, 7, 6, 5, 4, 3, 2, 1, 0.5, 0.1, 0.05, 0.01, 0.005, and 0.001 seconds. The delivery of the radiation amount may be substantially continuous during the duration time period, or may occur in a discontinuous manner over the exposure duration time period, for example by at least, and/or at most, of any of the following: l, 2, 3, 4, 5, 6, 7, 8, 9, 10, 15, and 20 pulses of radiation.

If multiple pulses of radiation are used, then it may be beneficial for the intervals between the pulses of radiation energy to be short enough so that the multiple pulses may have cumulative effect. An individual pulse of radiation may have a duration of at least about, and/or at most about, any of the following values: 10, 20, 30, 40, 50, 60, 70, 80, 90, 100, 200, 300, 400, 500, 700, and 900 milliseconds. Further, the radiation energy amount may be delivered by a pulsed source operating at from about 1 to about 120 Hz.

The duration discussed above may also be considered a residence time for a portion of the film that is in the exposure zone of a non-ionizing radiation delivery device (e.g., a UV lamp), for example, where the film is in the form of a continuous web that travels beneath a non-ionizing radiation delivery device, which may be continuously irradiating that portion of the web that travels through the non-ionizing radiation exposure zone.

The effective amount of non-ionizing radiation energy may be considered a function of the radiation intensity (i.e., the rate of radiation energy flow per unit area) and the duration of the radiation exposure, to achieve an effective surface dose (i.e., the radiation energy per unit area at the surface of the film). The relationship between these factors may be illustrated by the following equation: (intensity) x (duration) = surface dose.

The non-ionizing radiation energy exposure step may comprise a non-ionizing average radiation intensity over the duration period (measured at the surface of the film) of at least about any of the following: 10, 30, 50, 80, 100, 150, 200, 250, 300, 400, 500, 800, 1,000, 1,200, 1,500, and 1,800 mW/cm2; and at most about any of the following: 2,000, 1,800, 1,500, 1,200, 1,000, 800, 500, 450, 400, 350, 300, 250, 200, 150, and 100 mW/cm2. If the non-ionizing radiation is delivered discontinuously (e.g., as a series of pulses) over the duration period, then any of these forgoing intensity values may describe the average non-ionizing radiation intensity over the duration. Further, any of these forgoing intensities may occur during one or more pulses of radiation, if the radiation energy is delivered in a discontinuous manner. Any of these intensities may be derived solely from the amount of UV radiation energy present in the non-ionizing radiation exposure step (e.g., UV radiation in any of the UV wavelength ranges described above), or may be derived solely from UV radiation in any of the UV wavelength ranges described above.

The amount of non-ionizing radiation energy (measured at the surface of the film) of the exposing step delivered during any of the durations discussed above may include at least about, and/or at most about, any of the following surface doses: 0.1, 0.5, 1, 5, 10, 20, 50, 100, 500, 1,000, 5,000, 10,000, and 20,000 mJ/cm2 (i.e., milli-Joules/cm2). Any of these surface doses may be derived solely from the amount of UV radiation energy present in the non-ionizing radiation exposure step (e.g., UV radiation in any of the UV wavelength ranges described above), or may be derived solely from UV radiation in any of the UV wavelength ranges described above.

The radiation intensity of the non-ionizing radiation may be measured at the surface of the film utilizing the types of detectors, filters, and radiometers that are correctly calibrated and appropriate for the wavelength ranges of the radiation being measured, as is known to those of skill in the art. See, for example, A. Ryer, "Light Measurement Handbook" (1998, International Light, Inc., Newburyport, MA), which is incorporated herein in its entirety by reference. For example, a silicon detector type may be useful for measuring the radiation intensity for radiation wavelengths of from about 250 to about 1050 nm, in conjunction with a radiometer such as the IL 1700 (International Light Inc.).

As is also known to those of skill in the art, if a broad range of non-ionizing radiation wavelengths contributes to the radiation being measured, then one or more filters may be used to reduce or eliminate the radiation wavelengths for which a particular detector type is not appropriate or optimum, and the previously filtered radiation wavelength ranges may be subsequently measured with an appropriate detector while filtering the previously measured radiation wavelengths. The total radiation intensity may be calculated by summing the radiation intensities of the separate measurements of different wavelength ranges.

Useful equipment and methods for providing various types of non-ionizing radiation energy are known to those of skill in the art. For example, the radiation energy may be provided by a photoflash, a flashlamp (e.g., pulsed, gas-filled flashlamps), arc lamps, excimer lamps, spark-gap discharge apparatus, and solid state devices such as UV LED (Light Emitting Diodes).

For example, the radiation energy may be provided by a pulsed lamp system such as those available from Xenon Corp. (Woburn, MA) (e.g., model RC-740, dual lamp and model RC-747 pulsating xenon light) and Maxwell Laboratories, Inc. (e.g., Flashblast Model FB-100 pulsed light system), and those described in U.S. Patents 5,034,235 and 6,449,923.

Also by way of example, the radiation energy may be provided by low pressure, medium pressure or high pressure mercury arc lamps. Medium pressure mercury arc lamps are available from a variety of suppliers such as Fusion UV Systems, Gaithersburg, MD.

### Shrink Packaging a Product

A package (e.g., a bag or a food package system) may comprise the film comprising the photothermic material. A product (i.e., an object) may be packaged by enclosing the product in the package comprising the film. For example, the film may be wrapped around an object to be packaged (i.e., a product) and sealed around its edges. A bag may comprise the film, for example, by heat sealing the film to itself to form the bag into which an object (i.e. a product, for example, a food product) may be placed. The air pressure in the package, such as a bag, may be lowered (e.g., vacuum) and the package subsequently sealed or clipped closed.

The package may optionally be heated, for example by other than radiation exposure, so that the temperature of the film is placed within any of the temperature ranges discussed above with respect to the film temperature at the start of the non-ionizing radiation exposure step.

The package may then be exposed to the amount of non-ionizing radiation effective to activate the shrink characteristic of the film, as discussed above. Upon activation of the shrink characteristic of the film, the film may contract about the packaged object to provide a tight package appearance. The activation of the shrink characteristic of the film of the package may occur without exposing the film to an external thermal heat source such as those sources used to activate shrink characteristic by thermal conduction (e.g., a water bath or hot-air tunnel). Alternatively, the shrink characteristic of the film of the package may be activated by exposure to an external thermal heat source (such as those sources used to activate shrink characteristic by thermal conduction) at a time selected from one or more of before, during, or after the step of exposing the film to an effective amount of non-ionizing radiation to activate the shrink characteristic of the film of the package.

To facilitate the contraction of the film, a vent hole may be cut into a portion of the film to allow trapped air to escape from the package as the film shrinks.

The package may comprise a lid comprising the film comprising the photothermic material. For example, a lid may be sealed to a tray to enclose a product; see, for example, U.S. Patent 6,627,273 and U.S. Patent Application 10/201,441 filed July 23, 2002. Such lids may be modified to incorporate the photothermic material as set forth in this Application. Upon activation of the shrink characteristic, the lid may form a tight, wrinkle-free appearance.

Products (i.e., objects) that may be packaged in a package comprising the film include food (e.g., meat, such as fresh or frozen red meat or poultry, frozen pizzas), paper products (e.g., stationery, plates, cards, calendars), toys, games, hardware, and information storage devices (e.g., cassettes, compact discs).

An article that is used to provide a protective coating, surface, cladding, or insulation may incorporate the film described in this Application comprising photothermic material. Such an article may be used, for example, to reduce the likelihood of corrosion or an electrical short at a spice, cable termination, or feed-through assembly. Such a product may be a "shrink sleeve," a term that as used herein includes those products known in the telecommunication and power transmission fields as "heat shrink sleeves," "splice closures," "heat shrink tubes," "heat recoverable tubes," and "cable seals." Any of these products may comprise the film of the present invention, and the shrink characteristic of the film incorporated into the shrink sleeve may be activated by the exposure to an effective amount of non-ionizing radiation as set forth in this Application. For example, a tube may be made by sealing the film to itself, or the film may be made in tubular form. The workpiece (e.g., cable or splice) to be protected may be inserted within the article, and the article may then be exposed to an amount of non-ionizing radiation effective to activate the shrink characteristic. For example, a tubing article comprising the film may form a tight enclosure to help protect the wire and splice from water exposure. Examples of shrink sleeves that may incorporate the film comprising photothermic material are described in U.S. Patents 3,455,337; 3,593,383; 3,717,717; 3,995,964; 4,035,534; 4,085,286; 4,017,715; 4,170,296; 4,207,364; 4,219,051; 4,421,582; 4,421,945; 4,424,246; 4,586,971; 4,915,990; 5,117,094; 5,360,945; 5,479,553; 5,528,718; 5,557,073; 5,692,299; 5,736,208; 6,107,574; 6,226,435; and 6,359,226.

A tamper-evident shrink band (e.g., a neckband bottle seal or closure) may also comprise the film comprising the photothermic material. The shrink band may span a container and its closure (e.g., a bottle neck and the cap) to form a tight fit after activation of the shrink characteristic. See, for example, U.S. Patents 6,276,531 to Andrews; 5,904,266 to Tedeschi; 5,641,084 to Rice; 5,544,770 to Travisano; 5,292,018 to Travisano; 4,813,559 to Kenyon; and 4,782,976 to Kenyon. The bottle, or the bottle and its closure, may be inserted within the shrink band. The shrink characteristic of the shrink band may then be activated by exposing the shrink band to an effective amount of non-ionizing radiation, as discussed in this Application.

A shrink label may comprise any of the films comprising photothermic material as described in this Application. The term "shrink label" as used herein refers to a shrinkable film, for example in a tube or sleeve configuration, that is adapted for placement over or around a container (e.g., a glass or plastic bottle) and then shrunk to conform to the size and shape of the container in order to label the container. The shrink label may comprise printed images and/or information. Exemplary shrink labels that may be adapted to comprise film incorporating photothermic material include those described in one or more of U.S. Patent 6,875,485 to Kanai et al; U.S. Patent 6,808,822 to Rajan et al; U.S. Patent 6,691,439 to Miyashita et al; U.S. Patent 5,070,180 to Fukuda; and U.S. Patent 4,325,762 to Burmeister et al. The shrink label may be positioned or applied to or around a container (e.g., a bottle). The shrink characteristic of the shrink label may then be activated by exposing the shrink label to an effective amount of non-ionizing radiation, as discussed in this Application.

The following examples are presented for the purpose of further illustrating and explaining one or more embodiments of the present invention and are not to be taken as limiting in any regard. Unless otherwise indicated, all parts and percentages are by weight. The following abbreviations are used in the Examples:
EVA1 is an ethylene/vinyl acetate copolymer having 12% vinyl acetate content, available from DuPont under the Elvax 3134Q trade name.
EVA2 is an ethylene/vinyl acetate copolymer having 9% vinyl acetate content, available from ExxonMobil under the Escorene LD318 trade name.
EVA3 is an ethylene/vinyl acetate copolymer having 28% vinyl acetate content, available from ExxonMobil under the Escorene LD713.93 trade name.
EVA4 is an ethylene/vinyl acetate copolymer having 28% vinyl acetate content, available from Exxon Mobil Corporation under the Escorene LD761.36 trade name.
LDPE1 is a low density polyethylene having a melt index of 12 g/10 min measured according to ASTM D1238 (Condition 190/2.16) and provided as a component of the titanium dioxide masterbatch 110858 from Ampacet Corporation
LLDPE1 is a linear low density polyethylene available from Dow Corporation under the Dowlex 2045 trade name.
LLDPE2 is a linear low density polyethylene having a melt index of 25 g/10 min measured according to ASTM D1238 Condition 190/2.16 and provided as a component of the zinc oxide masterbatch from PolyOne Corporation.
LLDPE3 is a linear low density polyethylene available from ExxonMobil Corporation under the Exceed 4518PA trade name.
LLDPE4 is a linear low density polyethylene available from ExxonMobil Corporation under the Excorene LL3003.32 trade name.
MDPE1 is a medium density polyethylene available from Dow Corporation under the Dowlex 2037 trade name.
PVDC1 is a polyvinylidene chloride copolymer available from Dow Corporation under the Saran 806 trade name.
UVB1 is an organic photothermic material that is 2-(2'-Hydroxy-3'-tert-butyl-5'-methylphenyl)-5-chlorobenzotriazole available from Ciba Geigy Corporation under the Tinuvin 326 trade name.
UVB2 is an organic photothermic material that is a benzotriazole available from Ciba Geigy Corporation under the Tinuvin T234 trade name.
VLDPE1 is a very low density polyethylene available from Dow Corporation under the ATTAIN 4203 trade name.
VLDPE2 is a very low density polyethylene available from Dow Corporation under the Affinity PL1850G trade name.
VLDPE3 is a very low density polyethylene available from Dow Corporation under the Affinity PL1280 trade name.
ZnO-1 is zinc oxide available from BASF Corporation under the Z-Cote trade name in the form of particles having an average particle size of 60 nm.
ZnO-2 is zinc oxide available from Elementis Corporation under the Decelox trade name in the form of particles having an average particle size of 50 to 55 nm.
ZnO-3 is zinc oxide available from Nanoscale Materials, Inc. under the Nanoactive ZnO trade name in the form of particles having a fully dispersed average particle size of less than 10 nm.
ZnO-4 is zinc oxide having an average particle size of 60 nm used by PolyOne Corporation in its zinc oxide masterbatch described below.
TiO2-1 is titanium dioxide having an average particle size of 23 nm.
TiO2-2 is titanium dioxide having an average particle size of 230 nm.

### Examples 1-5

Three zinc oxide particle masterbatches were formed by compounding 10 weight % of each of ZnO-1, ZnO-2, and ZnO-3 with EVA1 using a Leistritz co-rotating twin screw extruder. Each of the zinc oxide masterbatches was then blended with LLDPE1 at a ratio of 85 wt. % LLDPE1 to 15 wt. % masterbatch to give a final zinc oxide particle content of 1.5 wt. %.

A titanium dioxide materbatch was formed by compounding 5 wt. % TiO2-1 with EVA2 in the same manner as above. The titanium dioxide masterbatch was blended with LLDPE1 at a ratio of 70 wt. % LLDPE1 to 30 wt. % masterbatch to give a final titanium dioxide content of 1.5 wt. %.

A zinc oxide masterbatch was procured from PolyOne Corporation containing 25% ZnO-4 and 75% EVA3. The zinc oxide masterbatch was blended with LLDPE1 at a ratio of 94 wt. % LLDPE1 to 6 wt. % masterbatch to give a final zinc oxide content of 1.5 wt. %.

Each resulting dry blend was compounded on a Leistritz co-rotating twin screw extruder, and extruded as a 0.025 mm (1 mil) thick film. Also, three unfilled 0.025 mm (1-mil) films were extruded to contain: 1) 85% LLDPE1 and 15% EVA1, 2) 70% LLDPE1 and 30 % EVA2, and 3) 100 % LLDPE1.

The transmission of UV and visible light was measured for each of the eight resulting films; the films that contained the particles showed preferential absorption of UV light compared to the films that did not contain the particles. Light transmission in the visible light wavelengths remained high, indicating that high optical transparency was maintained, and minimal light scattering occurred in these films.

0.43 mm (17-mil) thick plaques were also prepared using each of the above blends. Each plaque was heated to 92°C (210°F) and held at that temperature (i.e., soaked) for 60 seconds. Each plaque was then biaxially stretched at 15 inches per second so that each of the final dimensions of length and width were extended by 300 % relative to the initial length and width. The final thickness for each of the resulting oriented Examples 1-4 films and the Comparisons 1-3 films was 0.025 mm (1 mil). After stretching, each film was immediately quenched to lock shrink tension into the film. The films had a shrink initiation temperature of about 55°C.

A 76 mm by 76 mm (3-inch) by 3-inch sample of each film was placed in a chamber 1 inch from a UV light source, which was a pulsed lamp system Model RC-747 (Xenon Corp., Woburn, MA) pulsating xenon light having a 4.2-inch spiral lamp. The electromagnetic radiation energy distribution for this lamp for wavelengths of from 200 nm to 1,000 nm as reported by the manufacturer is shown below.

**Relative Irradiance Distribution**

| Wave Length Range | Distribution of Relative Irradiance |
|---|---|
| 200-300 nm | 3.80% |
| 300-400 nm | 13.90% |
| 400-500 nm | 19.20% |
| 500-600 nm | 14.80% |
| 600-700 nm | 11.70% |
| 700-800 nm | 8.90% |
| 800-900 nm | 13.30% |
| 900-1,000 nm | 14.40% |
| 200-1,000 nm | 100% |

Each sample was exposed for 2 or 5 seconds in pulsing mode with a 10 pulses per second frequency and at 60 milliseconds per pulse. The surface dose for the UV radiation was calculated to have been about 354 milliJoules/cm2 for the 2 second exposure duration and about 885 mJ/cm2 for the 5 second exposure duration. The resulting linear free shrink amounts after irradiation are shown in Table 1.

The Comparison 3 and Example 5 films were also submerged in an 85°C water bath for 8 seconds. The linear free shrink for the films is reported below in Table 1.

**Table 1**

| | Film Composition | Linear Free Shrinkage (%) 2 sec UV exposure | Linear Free Shrinkage (%) 5 sec UV exposure | Linear Free Shrinkage (%) 8 sec 85°C Water Bath |
|---|---|---|---|---|
| Comparison 1 | 85% LLDPE1 | 0% | 4% | -- |
| | 15% EVA1 | | | |
| Comparison 2 | 70% LLDPE1 | 0% | 4% | -- |
| | 30% EVA2 | | | |
| Comparison 3 | 100% | 0% | 8% | 13% |
| | LLDPE1 | | | |
| Example 1 | 85% LLDPE1 | 19% | 54% | -- |
| | 13.5% EVA1 | | | |
| | 1.5%ZnO-1 | | | |
| Example 2 | 85% LLDPE1 | 11% | 50% | -- |
| | 13.5% EVA1 | | | |
| | 1.5% ZnO-2 | | | |
| Example 3 | 85% LLDPE1 | 15% | 54% | -- |
| | 13.5% EVA1 | | | |
| | 1.5% ZnO-3 | | | |
| Example 4 | 70% LLDPE1 | 21% | 63% | -- |
| | 28.5% EVA2 | | | |
| | 1.5% TiO2-1 | | | |
| Example 5 | 94% LLDPE1 | 21% | 54% | 15% |
| | 4.5% EVA3 | | | |
| | 1.5% ZnO-4 | | | |

| | | | | |
|---|---|---|---|---|
| "-" above signifies that the sample was not tested under the referenced condition. | | | | |

Further, samples of the Example 5 and Comparison 3 films were exposed for 1, 2, 3, and 5 seconds in pulsing mode with a 10 pulses per second frequency and at 60 milliseconds/pulse at a distance of either 25 mm or 50 mm (1 inch or 2 inches) from the lamp radiation source. The resulting linear shrink tensions during irradiation are shown in Table 2. The Example 5 and Comparison 3 films were also submerged in an 85°C water bath for the exposure duration noted below The linear free shrink for the films is reported below in Table 2.

**Table 2**

| | Film Composition | Shrink Tension (psi) | | | |
|---|---|---|---|---|---|
| | | 1 sec exposure | 2 sec exposure | 3 sec exposure | 5 sec exposure |
| Comparison 3 (1" from lamp) | 100% LLDPE1 | 60 | 136 | 82 | 86 |
| Comparison 3 (85° water bath) | 100% LLDPE1 | 254 | 387* | -- | -- |
| Example 5 (1" from lamp) | 94%LLDPE1 | 284 | 375 | 515 | 470 |
| | 4.5% EVA3 | | | | |
| | 1.5% ZnO-4 | | | | |
| Example 5 (2" from lamp) | 94% LLDPE1 | 218 | 457 | 580 | 691 |
| | 4.5% EVA3 | | | | |
| | 1.5% ZnO-4 | | | | |
| Example 5 (85° water bath) | 94% LLDPE1 | 326 | 479* | -- | -- |
| | 4.5% EVA3 | | | | |
| | 1.5% ZnO-4 | | | | |

| | | | | | |
|---|---|---|---|---|---|
| *maximum shrink force that occurred during the 2 second exposure interval. "-" above signifies that the sample was not tested under the referenced condition. | | | | | |

### Example 6

A resin blend was formed by compounding 2.9 wt. % of UVB1 and 1 wt. % of UVB2 with MDPE1 using a Leistritz co-rotating twin screw extruder to extrude a 0.38 mm (15 mil) thick film and a 0.05 mm (2 mil) thick film. A 0.38 mm (15 mil) thick film and a 0.05 mm (2 mil) thick film of 100 % MDPE1 were also extruded using the same co-rotating twin screw extruder.

The transmission of UV and visible light was measured for each of the resulting films; the films that contained the organic photothermic material showed preferential absorption of UV light compared to the films that did not contain organic photothermic material. Light transmission in the visible light wavelengths remained high, indicating that high optical transparency was maintained, and minimal light scattering occurred in these films.

Square plaques were cut from the 15-mil thick film containing UVB 1 and UVB2 (Example 6) and from the 15-mil thick film of 100% MDPE1 (Comparison 4). Each plaque was heated to 230°F and held at that temperature (i.e., soaked) for 60 seconds. Each plaque was then biaxially stretched at 15 inches per second so that each of the final dimensions of length and width were extended by 250 % relative to the initial length and width. The final thickness for each of the resulting Example 6 film and Comparison 4 film was 0.013 mm (0.5 mil). After stretching, each film was immediately quenched to lock shrink tension into the film. The films had a heat shrink initiation temperature of about 55°C.

A 50 mm by 50 mm (2-inch by 2-inch) sample of each film was placed on a tray. Each tray was placed on the conveyer belt of a Lesco C6120 UV curing conveyer, and passed under the UV light source at a selected constant speed ranging from 6 m/min (20 ft/min) to 15 m/min (50 ft/min) as shown in Table 3. The resulting free shrink of the films from the non-ionizing radiation exposure are shown in Table 3.

The light source of the curing conveyor was a 6,000W Epic Lamp (Fusion) utilizing an H+ bulb. It is believed that approximately 30% of the radiation energy intensity provided by the lamp is ultraviolet radiation. The lamp radiation emission was focused into a line having a width of approximately 12 mm (0.5 inches) and a linear intensity of about 150 00 m/mm (600W/inch) providing an average intensity of UV radiation over the exposure duration of about 2,910 mW/cm2.

**Table 3**

| | Film Composition | Linear Free Shrink (%) and calculated UV Surface Dose at conveyor speeds of: | | | |
|---|---|---|---|---|---|
| | | 15 m/min (50 ft/min) | 12 m/min (40 ft/min) | 9 m/min (30 ft/min) | 6 m/min (20 ft/min) |
| Surface Dose | | 146 mJ/cm2 | 182 mJ/cm2 | 243 mJ/cm2 | 364 mJ/cm2 |
| Comparison 4 | 100% | 0% | 0% | 0% | 0% |
| | MDPE1 | | | | |
| Example 6 | 96.1% | 3% | 13% | 38% | 56% |
| | MDPE1 | | | | |
| | 2.9% UVB1 | | | | |
| | 1% UVB2 | | | | |

### Examples 7-8

A seven-layer Comparison 5 film having the structure shown in Table 4 was made by first cast extruding layers 1-3, then electronically crosslinking these layers, then extrusion coating layers 4-7 onto the crosslinked substrate layers 1-3. The resulting film was biaxially oriented using a double bubble process to form 0.064 mm (2.5 mil) thick films.

**Table 4**

| Layer No.: | 1 | 2 | 3 | 4 | 5 | 6 | 7 |
|---|---|---|---|---|---|---|---|
| Function | sealant | 1^{st} core | tie | barrier | tie | 2^{nd} core | abuse |
| Thickness BF* mm (mils) | 0.127 (5) | 0.229 (9) | 0.0254 (1) | 0.0559 (2.2) | 0.0254 (1) | 0.0762 (3) | 0.0508 (2) |
| Thickness AF** mm (mils) | 0.0122 (0.48) | 0.0218 (0.86) | 0.0025 (0.1) | 0.0048(0.19) | 0.0025 (0.1) | 0.0074 (0.29) | 0.0048 (0.19) |
| Composition | 80% - VLDPE3 20% - LLDPE4 | 80% - VLDPE1 20% - LLDPE1 | EVA3 | PVDC1 | EVA4 | VLDPE1 | 85% - VLDPE2 15% - LLDPE1 |

| | | | | | | | |
|---|---|---|---|---|---|---|---|
| *BF = before orientation **AF = after orientation | | | | | | | |

An Example 7 film was made using the same process, structure, and composition as the Comparison 5 film, except that the layer 1 had the composition of 80 wt % VLDPE/LLDPE blend and 20 wt % of a zinc oxide masterbatch procured from PolyOne Corporation ("ZnO-4 Masterbatch"), which contained 25% ZnO-4 and 75% LLDPE2. The ZnO-4 Masterbatch was dry-blended with the other components of layer 1. Accordingly, the total loading of ZnO-4 in the layer 1 was 5% based on the weight of layer 1; and the loading of ZnO-4 based on the weight of the entire film was 1.1%.

An Example 8 film was made using the same process, structure, and composition as the Comparison 5 film, except that ZnO-4 Masterbatch was incorporated into the layers 1, 2, and 6 in an amount of 5 wt % ZnO-4 Masterbatch, with the balance of the layer being the resin of the corresponding Comparison 5 layer. Accordingly, the total loading of ZnO-4 in each of layers 1, 2, and 6 was 1.25 wt %; and the loading of ZnO-4 based on the weight of the entire film was 0.92%.

The transmission of UV and visible light was measured for each of the Comparison 5 and Examples 7-8 films. The Examples 7-8 films, which contained the ZnO-4 photothermic particles showed preferential absorption of UV light compared to the Comparison 5 film that did not contain the particles. Light transmission in the visible light wavelengths remained high, indicating that high optical transparency was maintained, and minimal light scattering occurred in these films.

A 50 mm by 50 mm (2-inch by 2-inch) sample of each of the Comparison 5 and Examples 7-8 films was placed on a tray. Each tray was placed on the conveyer belt of the UV curing conveyor discussed above, and passed under the UV light source at a selected constant speed ranging from 6 m/min to 15 m/min (20 ft/min to 50 ft/min) as shown in Table 5. The resulting free shrink of the films from the non-ionizing radiation exposure are shown in Table 5. Since the transverse and machine direction shrinks were about the same for these films, the linear free shrink values below are an average of the machine and transverse direction linear free shrinkage values.

The Comparison 5 and Examples 7-8 films were also submerged in an 85°C water bath for 8 seconds. The average of the machine and transverse direction linear free shrinks for the films is also reported below in Table 5.

**Table 5**

| | Linear free shrink (85°C water bath) | Linear Free Shrink (%) and calculated UV Surface Dose at conveyor speeds of: | | | |
|---|---|---|---|---|---|
| | | 15 m/min (50 ft/min) | 12 m/min (40 ft/min) | 9 m/min (30 ft/min) | 6 m/min (20 ft/min) |
| Surface Dose | | 146 mJ/cm2 | 182 mJ/cm2 | 243 mJ/cm2 | 364 mJ/cm2 |
| Comparison 5 | 41% | 0% | 2% | 6% | 12% |
| Example 7 | 39% | 14% | 20% | 36% | 39% |
| Example 8 | 40% | 15% | 25% | 33% | 45% |

### Example 9

A four-layer Example 9 film having the structure shown in Table 6 was made by cast extruding the film, followed by electronically crosslinking the cast film, then biaxially orienting the film using a double bubble process to form 0.050 mm (2.0 mil) thick film.

Layer 2 comprised 78 wt. % VLDPE, 11 wt % LDPE, and 11 wt % TiO2-2. The loading of TiO2-2 based on the weight of the entire film was 5.5%. The size of the TiO2 particles in layer 2 was sufficient scatter visible light, so the film was opaque to visible light. A multicolor print was applied to the surface of the bag.

**Table 6**

| Layer No.: | 1 | 2 | 3 | 4 |
|---|---|---|---|---|
| Function | sealant | core | core | abuse |
| Thickness BF* (mils) | 0.09 (3.5) | 0.29 (11.5) | 0.11 (4.5) | 0.08 (3.0) |
| Thickness AF** (mils) | 0.0081 (0.32) | 0.0254 (1.0) | 0.02 (0.40) | 0.0071 (0.28) |
| Composition | LLDPE3 | 78% VLDPE1 1 | VLDPE1 | 85% EVA |
| | | 1% LDPE1 | | 15% LLDPE1 |
| | | 11% TiO2-2 | | |

| | | | | |
|---|---|---|---|---|
| *BF = before orientation **AF = after orientation | | | | |

76 mm by 76 mm (3-inch by 3-inch) samples of Example 9 film were placed on trays. Each tray was placed on the conveyer belt of the UV curing conveyor discussed in Example 6, and passed under the UV light source (as described in Example 6) at a selected constant speed ranging from 9 m/min to 18 m/min (30 ft/min to 60 ft/min). The resulting free shrink of the films from the non-ionizing radiation exposure are shown in Table 7.

The Example 9 film was also submerged in an 85°C water bath for 8 seconds. The linear free shrinks for the films is also reported in Table 7. The free linear shrink values were reported for both machine and transverse since they differed substantially in this film.

**Table 7**

| | Linear free shrink (85°C water bath) | Linear Free Shrink (%) and calculated UV Surface Dose at conveyor speeds of: | | | |
|---|---|---|---|---|---|
| | | 18 m/min (60 ft/min) | 15 m/min (50 ft/min) | 12 m/min (40 ft/min) | 9 m/min (30 ft/min) |
| Surface Dose | | 121 mJ/cm2 | 146 mJ/cm2 | 182 mJ/cm2 | 243 mJ/cm2 |
| Example 9 - Machine Direction | 26% | 10% | 20% | 22% | 40% |
| Example 9 - Transverse Direction | 39% | 10% | 24% | 33% | 46% |

### Example 10

A bag configured to contain a chicken carcass was formed from the Example 8 film by heat sealing the edges of the film together. A refrigerated chicken carcass was placed in the open end of the bag, which was then vacuumed sealed closed. The packaged chicken was then placed into a chamber containing a UV light source, which was the lamp described above in Examples 1-5. The package was irradiated by the lamp in pulsing mode at a distance ranging from 50 mm to 150 mm (2 inches to 6 inches). The package was subjected to nine consecutive UV light exposures each lasting 12 seconds. The package was rotated 30° clockwise in front of the lamp between each exposure. The total exposure time was 108 seconds. The UV light exposure caused the bag to shrink tightly around the packaged chicken carcass.

### Example 11

A bag configured to contain a cut of beef was formed from the Example 8 film by heat sealing the edges of the film together. A 13 mm (½-inch) thick refrigerated beef flank steak was placed in the open end of the bag, which was then vacuumed sealed closed. The packaged steak was then placed on a conveyor and passed under a UV light source, which was the lamp and configuration described above in Examples 6-8. The conveyor speed was 6 m/min (20 feet/minute). The packaged steak was passed under the UV light source two consecutive times, then flipped over and passed under the source two more times, for a total of four passes. The UV light exposure caused the bag to shrink tightly around the packaged beef steak.

Any numerical ranges recited herein include all values from the lower value to the upper value in increments of one unit provided that there is a separation of at least 2 units between any lower value and any higher value. As an example, if it is stated that the amount of a component or a value of a process variable (e.g., temperature, pressure, time) may range from any of 1 to 90, 20 to 80, or 30 to 70, or be at least any of 1, 20, or 30 and at most any of 90, 80, or 70, then it is intended that values such as 15 to 85, 22 to 68, 43 to 51, and 30 to 32, as well as at least 15, at least 22, and at most 32, are expressly enumerated in this specification. For values that are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

The above descriptions are those of preferred embodiments of the invention. Various alterations and changes can be made without departing from the spirit and broader aspects of the invention as defined in the claims, which are to be interpreted in accordance with the principles of patent law, including the doctrine of equivalents. Except in the claims and the specific examples, or where otherwise expressly indicated, all numerical quantities in this description indicating amounts of material, reaction conditions, use conditions, molecular weights, and/or number of carbon atoms, and the like, are to be understood as modified by the word "about" in describing the broadest scope of the invention. Any reference to an item in the disclosure or to an element in the claim in the singular using the articles "a," "an," "the," or "said" is not to be construed as limiting the item or element to the singular unless expressly so stated. The definitions and disclosures set forth in the present Application control over any inconsistent definitions and disclosures that may exist in an incorporated reference. All references to ASTM tests are to the most recent, currently approved, and published version of the ASTM test identified, as of the priority filing date of this application. Each such published ASTM test method is incorporated herein in its entirety by this reference.

## Claims

1. A method of activating the shrink characteristic of a film comprising the steps of:
providing a film comprising:
one or more thermoplastic polymers; and
at least about 0.01 weight % based on the weight of the film of photothermic material comprising one or more materials selected from organic photothermic material, titanium dioxide, zinc oxide, iron oxide, tin oxide, zinc sulfide, gallium nitride, gallium disulfide, cuprous chloride, copper aluminum disulfide, and silicon carbide; and
exposing the film to non-ionizing radiation at an average intensity at the surface of the film of at least 10 mW/cm² of radiation having wavelengths of from 200 to 700 nm to generate heat thereby:
to shrink the film by at least 5% in at least one direction; and/or
to increase the tension in the film by at least 0.35 MPa (50 pounds per square inch) in at least one direction.

2. The method of claim 1 wherein the photothermic material comprises photothermic particles.

3. The method of claim 2 wherein the photothermic particles have an average size of at most 100 nm in at least one dimension.

4. The method of claim 2 wherein the photothermic particles have an average size of at least 105 nm in the shortest dimension.

5. The method of any one of claims 2-4 wherein the photothermic particles comprise inorganic photothermic material.

6. The method of any one of claims 2-5 wherein the photothermic particles comprise at least 40 weight % titanium dioxide (TiO₂).

7. The method of any one of claims 2-6 wherein the photothermic particles comprise at least 40 weight % zinc oxide (ZnO).

8. The method of any one of claims 2-7 wherein the photothermic particles comprise at least 40 weight % of one or more materials selected from iron oxide (Fe₂O₃, Fe₃O₄), tin oxide (SnO₂), zinc sulfide (ZnS), gallium nitride (GaN), gallium disulfide (GaS₂), cuprous chloride (CuCl), copper aluminium disulfide (CuAlS₂), silicon carbide (SiC), and semiconducting fullerenes.

9. The method of any one of claims 2-8 wherein the photothermic particles comprise at least 40 weight % of one or more material having a photonic band gap at 20°C (68°F) of at least 3.1 eV.

10. The method of any one of the preceding claims wherein the photothermic material is in solution with the one or more thermoplastic polymers.

11. The method of any one of the preceding claims wherein the photothermic material is incorporated into the molecular structure of the one or more thermoplastic polymers.

12. The method of any one of the preceding claims wherein the temperature of the film at the start of the exposing step is at most 38°C (100°F).

13. The method of any one of the preceding claims further comprising the step of heating the film so that the temperature of the film at the start of the exposing step is at least 2-8°C (5°F) below the shrink initiation temperature of the film, wherein the heating step occurs other than by radiation exposure.

14. The method of any one of the preceding claims wherein the film of the providing step has a free shrink at 150°C (300°F) in at least one direction of at least 20% measured according to ASTM D 2732.

15. The method of any one of the preceding claims wherein the film of the providing step has a free shrink at 85°C (185°F) in at least one direction of at least 10% measured according to ASTM D 2732.

16. The method of any one of the preceding claims wherein the exposing step shrinks the film by at least 5% in at least one direction.

17. The method of any one of the preceding claims wherein the exposing step shrinks the film in at least one direction by at least 5 percentage points more than a shrink value in the same direction obtainable by exposing a comparative film to the same amount of non-ionizing radiation as the exposing step and under the same conditions as the exposing step, wherein the comparative film differs from the film of the providing step only in lacking the photothermic material.

18. The method of any one of the preceding claims wherein the film of the providing step has a shrink tension at 85°C (185°F) in at least one direction of at least 0.35 MPa (50 psi) measured according to ASTM D 2838 (Procedure A).

19. The method of any one of the preceding claims wherein the exposing step increases the tension in the film by at least 0.7 MPa (100 pounds per square inch) in at least one direction.

20. The method of any one of the preceding claims wherein the exposing step increases the tension in the film in at least one direction by at least 0.35 Mpa (50 psi) more than an increase in shrink tension in the same direction obtainable by exposing a comparative film to the same amount of non-ionizing radiation as the exposing step and under the same conditions as the exposing step, wherein the comparative film differs from the film of the providing step only in lacking the photothermic material.

21. The method of any one of the preceding claims wherein the film after the exposing step has an average transparency of at least 80% measured according to ASTM D1746.

22. The method of any one of the preceding claims wherein the film of the providing step has an oxygen transmission rate of at most 100 cubic centimeters (at standard temperature and pressure) per square meter per day per 1 atmosphere of oxygen pressure differential measured at 0% relative humidity and 23°C.

23. The method of any one of the preceding claims wherein the film of the providing step comprises a layer comprising at least 60 % by weight of the layer of polymer selected from one or more of ethylene/vinyl alcohol copolymer and vinylidene chloride polymer.

24. The method of any one of the preceding claims wherein the film of the providing step comprises a layer comprising at least 60 % by weight of the layer of polymer selected from one or more of polyamide and polyester.

25. The method of any one of the preceding claims wherein the film comprises at least 50 weight % of polyolefin by weight of the film.

26. The method of any one of the preceding claims wherein the film comprises at least three layers.

27. The method of any one of the preceding claims wherein the film comprises at least one layer comprising at least 50 % of the photothermic material by weight of the total amount of the photothermic material in the film.

28. The method of any one of the preceding claims wherein the film is at least 0.025 mm (1 mil) in thickness.

29. The method of any one of the preceding claims wherein the film comprises at least 0.05 % by weight of the film of photothermic material.

30. The method of any one of the preceding claims wherein the photothermic material comprises organic photothermic material selected from one or more of a benzophenone UV absorber, a benzotriazole UV absorber, *p*-aminobenzoic acid, Avobenzone, 3-benzylidene camphor, benzylidene camphor sulfonic acid, bisymidazylate, camphor benzalkonium methosulfate, cinoxate, diethylamino hydroxybenzoyl hexyl benzoate, diethylhexyl butamido triazone, dimethicodiethylbenzal malonate, dioxybenzone, drometrizole trisiloxane, ecamsule, ensulizole, homosalate, isoamyl *p*-methoxycinnamate, 4-methylbenzylidene camphor, menthyl anthranilate, octocrylene, octyl dimethyl PABA, octyl methoxycinnamate, octyl salicylate, octyl triazone, oxybenzone, PEG-25 PABA, polyacrylamidomethyl benzylidene camphor, sulisobenzone, bis-ethylhexyloxyphenol methoxyphenol triazine, methylene bis-benzotriazolyl tetramethylbutylphenol, and trolamine salicylate.

31. The method of any one of the preceding claims wherein the effective amount of non-ionizing radiation at an arevage intensity at the surface on the film is at least 100 mw/cm².

32. The method of any one of the preceding claims wherein the radiation has wavelengths of from 200 nm to 400 nm that is delivered within a duration of at most 30 seconds.

33. The method of any one of claims 1-31 wherein the radiation comprises a surface dose of at least 100 mJ/cm2 of radiation having wavelengths of from 200 nm to 400 nm that is delivered within a duration of at most about 10 seconds.

34. The method of any one of claims 1-31 wherein the radiation has wavelengths of from about 200 nm to about 400 nm.

35. The method of any one of claims 1-31 wherein the exposing step comprises exposing the film to an average radiation intensity at the surface of the film of at least 1,000 mW/cm2 of radiation having wavelengths of from 200 nm to 400 nm.

36. The method of any one of claims 1-31, 34 or 35 wherein the step of exposing to non-ionizing radiation occurs within at most about 10 seconds.

37. The method of any one of claims 1-31 wherein the non-ionizing radiation comprises at least 15% radiation having wavelengths of from 200 nm to 400 nm, based on the total amount of non-ionizing radiation of the exposing step.

38. The method of any one of the preceding claims wherein the film of the providing step comprises at least one layer comprising at least 0.01 weight % photothermic material by weight of the layer.

39. The method of any one of the preceding claims wherein the film of the providing step comprises at least one layer comprising at least 1 weight % photothermic material by weight of the layer.

40. The method of any one of the preceding claims wherein the film comprises:
an outer layer of the film; and
one or more discontinuous regions supported by the outer layer of the film,
wherein the one or more discontinuous regions comprise at least a portion of the photothermic material.

41. The method of any one of the preceding claims wherein the film comprises:
an outer layer of the film; and
one or more discontinuous regions supported by the outer layer of the film,
wherein the one or more discontinuous regions comprise at least a portion of the thermoplastic polymers and at least a portion of the photothermic material.

42. The method of any one of the preceding claims, further comprising:
enclosing a product in a package formed from the film of the providing step prior to the exposing step.

43. The method of claim 42 wherein the product comprises a food product.

## Patentansprüche

1. Verfahren zum Aktivieren der Schrumpfeigenschaft einer Folie, bei dem
eine Folie bereitgestellt wird, die ein oder mehrere thermoplastische Polymere und mindestens etwa 0,01 Gew.-%, bezogen auf das Gewicht der Folie, photothermisches Material umfasst, das ein oder mehrere Materialien ausgewählt aus organischem photothermischem Material, Titandioxid, Zinkoxid, Eisenoxid, Zinnoxid, Zinksulfid, Galliumnitrid, Galliumdisulfid, Kupfer(I)-chlorid, Kupferaluminiumdisulfid und Siliciumcarbid umfasst, und
die Folie nichtionisierender Strahlung bei einer durchschnittlichen Intensität an der Oberfläche der Folie von mindestens 10 mW/cm² von Strahlung mit Wellenlängen von 200 bis 700 nm ausgesetzt wird, um Wärme zu erzeugen, um **dadurch** die Folie in mindestens einer Richtung um mindestens 5 % zu schrumpfen und/oder die Spannung der Folie in mindestens einer Richtung um mindestens 0,35 MPa (50 Pfund pro Quadratzoll) zu erhöhen.

2. Verfahren nach Anspruch 1, bei dem das photothermische Material photothermische Teilchen umfasst.

3. Verfahren nach Anspruch 2, bei dem die photothermischen Teilchen in mindestens einer Dimension eine durchschnittliche Größe von höchstens 100 nm aufweisen.

4. Verfahren nach Anspruch 2, bei dem die photothermischen Teilchen in der kürzesten Dimension eine durchschnittliche Größe von mindestens 105 nm aufweisen.

5. Verfahren nach einem der Ansprüche 2 bis 4, bei dem die photothermischen Teilchen anorganisches photothermisches Material umfassen.

6. Verfahren nach einem der Ansprüche 2 bis 5, bei dem die photothermischen Teilchen mindestens 40 Gew.-% Titandioxid (TiO₂) umfassen.

7. Verfahren nach einem der Ansprüche 2 bis 6, bei dem die photothermischen Teilchen mindestens 40 Gew.-% Zinkoxid (ZnO) umfassen.

8. Verfahren nach einem der Ansprüche 2 bis 7, bei dem die photothermischen Teilchen mindestens 40 Gew.-% eines oder mehrerer Materialien ausgewählt aus Eisenoxid (Fe₂O₃, Fe₃O₄), Zinnoxid (SnO₂), Zinksulfid (ZnS), Galliumnitrid (GaN), Galliumdisulfid (GaS₂), Kupfer(I)-chlorid (CuCl), Kupferaluminiumdisulfid (CuAlS₂), Siliciumcarbid (SiC) und halbleitenden Fullerenen umfassen.

9. Verfahren nach einem der Ansprüche 2 bis 8, bei dem die photothermischen Teilchen mindestens 40 Gewichts-% eines oder mehrerer Materialien mit einer photonischen Bandlücke bei 20 °C (68 °F) von mindestens 3,1 eV umfassen.

10. Verfahren nach einem der vorhergehenden Ansprüche, bei dem das photothermische Material in Lösung mit dem einen oder den mehreren thermoplastischen Polymeren vorliegt.

11. Verfahren nach einem der vorhergehenden Ansprüche, bei dem das photothermische Material in die Molekularstruktur des einen oder der mehreren thermoplastischen Polymere inkorporiert ist.

12. Verfahren nach einem der vorhergehenden Ansprüche, bei die die Temperatur der Folie zu Beginn der Aussetzungsstufe höchstens 38 °C (100 °F) beträgt.

13. Verfahren nach einem der vorhergehenden Ansprüche, bei dem ferner die Folie so erwärmt wird, dass die Temperatur der Folie zu Beginn der Aussetzungsstufe mindestens 2,8°C (5 °F) unter der Schrumpfinitiierungstemperatur der Folie liegt, wobei die Erwärmungsstufe nicht durch Strahlungsaussetzung eintritt.

14. Verfahren nach einem der vorhergehenden Ansprüche, bei dem die Folie der Bereitstellungsstufe in mindestens einer Richtung eine freie Schrumpfung bei 150 °C (300 °F) von mindestens 20 % aufweist, gemessen gemäß ASTM D 2732.

15. Verfahren nach einem der vorhergehenden Ansprüche, bei dem die Folie der Bereitstellungsstufe in mindestens einer Richtung eine freie Schrumpfung bei 85 °C (185 °F) von mindestens 10 % aufweist, gemessen gemäß ASTM D 2732.

16. Verfahren nach einem der vorhergehenden Ansprüche, bei dem die Aussetzungsstufe die Folie in mindestens einer Richtung um mindestens 5 % schrumpft.

17. Verfahren nach einem der vorhergehenden Ansprüche, bei dem die Aussetzungsstufe die Folie in mindestens einer Richtung um mindestens 5 Prozentpunkte mehr schrumpft als ein Schrumpfwert in der gleichen Richtung, der erhältlich ist, indem eine Vergleichsfolie der gleichen Menge nichtionisierender Strahlung wie in der Aussetzungsstufe und den gleichen Bedingungen wie in der Aussetzungsstufe ausgesetzt wird, wobei die Vergleichsfolie sich von der Folie der Bereitstellungsstufe lediglich im Fehlen des photothermischen Materials unterscheidet.

18. Verfahren nach einem der vorhergehenden Ansprüche, bei dem die Folie der Bereitstellungsstufe in mindestens einer Richtung eine Schrumpfspannung bei 85 °C (185 °F) von mindestens 0,35 MPa (50 psi), gemessen gemäß ASTM D 2838 (Methode A), aufweist.

19. Verfahren nach einem der vorhergehenden Ansprüche, bei dem die Aussetzungsstufe die Spannung in der Folie in mindestens einer Richtung um mindestens 0,7 MPa (100 Pfund pro Quadratzoll) erhöht.

20. Verfahren nach einem der vorhergehenden Ansprüche, bei dem die Aussetzungsstufe die Spannung in der Folie in mindestens einer Richtung um mindestens 0,35 MPa (50 psi) mehr erhöht als eine Zunahme der Schrumpfspannung in der gleichen Richtung, die erhältlich ist, indem eine Vergleichsfolie der gleichen Menge nichtionisierender Strahlung wie in der Aussetzungsstufe und den gleichen Bedingungen wie in der Aussetzungsstufe ausgesetzt wird, wobei die Vergleichsfolie sich von der Folie der bereitstellenden Stufe lediglich im Fehlen des photothermischen Materials unterscheidet.

21. Verfahren nach einem der vorhergehenden Ansprüche, bei dem die Folie nach der Aussetzungsstufe eine durchschnittliche Transparenz von mindestens 80 % aufweist, gemessen gemäß ASTM D 1746.

22. Verfahren nach einem der vorhergehenden Ansprüche, bei dem die Folie der Bereitstellungsstufe eine Sauerstoffdurchlässigkeitsrate von mindestens 100 Kubikzentimetern (bei Standardtemperatur und -druck) pro Quadratmeter pro Tag pro 1 Atmosphäre Sauerstoffdruckdifferenz aufweist, gemessen bei 0 % relativer Feuchtigkeit und 23 °C.

23. Verfahren nach einem der vorhergehenden Ansprüche, bei dem die Folie der Bereitstellungsstufe eine Schicht umfasst, die mindestens 60 Gew.-% der Schicht Polymer ausgewählt aus einem oder mehreren von Ethylen/Vinylalkohol-Copolymer und Vinylidenchloridpolymer umfasst.

24. Verfahren nach einem der vorhergehenden Ansprüche, bei dem die Folie der Bereitstellungsstufe eine Schicht umfasst, die mindestens 60 Gew.-% der Schicht Polymer ausgewählt aus einem oder mehreren von Polyamid und Polyester umfasst.

25. Verfahren nach einem der vorhergehenden Ansprüche, bei dem die Folie mindestens 50 Gewichts-% Polyolefin umfasst, bezogen auf das Gewicht der Folie.

26. Verfahren nach einem der vorhergehenden Ansprüche, bei dem die Folie mindestens drei Schichten umfasst.

27. Verfahren nach einem der vorhergehenden Ansprüche, bei dem die Folie mindestens eine Schicht umfasst, die mindestens 50 % des photothermischen Materials enthält, bezogen auf das Gewicht der Gesamtmenge des photothermischen Materials in der Folie.

28. Verfahren nach einem der vorhergehenden Ansprüche, bei dem die Folie mindestens 0,025 mm (1 Millizoll) dick ist.

29. Verfahren nach einem der vorhergehenden Ansprüche, bei dem die Folie mindestens 0,05 Gewichts-% photothermisches Material enthält, bezogen auf das Gewicht der Folie.

30. Verfahren nach einem der vorhergehenden Ansprüche, bei dem das photothermische Material organisches photothermisches Material ausgewählt aus einem oder mehreren von einem Benzophenon-UV-Absorber, einem Benzotriazol-UV-Absorber, *p*-Aminobenzoesäure, Avobenzon, 3-Benzylidencampher, Benzylidencamphersulfonsäure, Bisymidazylat, Campherbenzalkoniummethosulfat, Cinoxat, Diethylaminohydroxybenzoylhexylbenzoat, Diethylhexylbutamidotriazon, Dimethicodiethylbenzalmalonat, Dioxybenzon, Drometrizoltrisiloxan, Ecamsul, Ensulizol, Homosalat, Isoamyl-*p*-Methoxycinnamat, 4-Methylbenzylidencampher, Menthylanthranilat, Octocrylen, Octyl Dimethyl PABA, Octylmethoxycinnamat, Octylsalicylat, Octyltriazon, Oxybenzon, PEG-25 PABA, Polyacrylamidomethylbenzylidencampher, Sulisobenzon, bis-Ethylhexyloxyphenolmethoxyphenoltriazin, Methylen-bis-Benzotriazolyltetramethylbutylphenol und Trolaminsalicylat umfasst.

31. Verfahren nach einem der vorhergehenden Ansprüche, bei dem die wirksame Menge nichtionisierender Strahlung bei einer durchschnittlichen Intensität an der Oberfläche der Folie von mindestens 100 mW/cm² liegt.

32. Verfahren nach einem der vorhergehenden Ansprüche, bei dem die Strahlung Wellenlängen von 200 nm bis 400 nm aufweist, die innerhalb einer Dauer von höchstens 30 Sekunden zugeführt wird.

33. Verfahren nach einem der Ansprüche 1 bis 31, bei dem die Strahlung eine Oberflächendosis von mindestens 100 mJ/cm² Strahlung mit Wellenlängen von 200 nm bis 400 nm umfasst, die innerhalb einer Dauer von höchstens etwa 10 Sekunden zugeführt wird.

34. Verfahren nach einem der Ansprüche 1 bis 31, bei dem die Strahlung Wellenlängen von etwa 200 nm bis etwa 400 nm aufweist.

35. Verfahren nach einem der Ansprüche 1 bis 31, bei dem in der Aussetzungsstufe die Folie einer durchschnittlichen Strahlungsintensität an der Oberfläche der Folie von mindestens 1000 mW/cm² von Strahlung mit Wellenlängen von 200 nm bis 400 nm ausgesetzt wird.

36. Verfahren nach einem der Ansprüche 1 bis 31, 34 oder 35, bei dem die Stufe des Aussetzens nichtionisierender Strahlung innerhalb von höchstens etwa 10 Sekunden erfolgt.

37. Verfahren nach einem der Ansprüche 1 bis 31, bei dem die nicht ionisierende Strahlung mindestens 15 % Strahlung mit Wellenlängen von 200 nm bis 400 nm umfasst, bezogen auf die Gesamtmenge nichtionisierender Strahlung der Aussetzungsstufe.

38. Verfahren nach einem der vorhergehenden Ansprüche, bei dem die Folie der Bereitstellungsstufe mindestens eine Schicht enthält, die mindestens 0,01 Gewichts-% photothermisches Material umfasst, bezogen auf das Gewicht der Schicht.

39. Verfahren nach einem der vorhergehenden Ansprüche, bei dem die Folie der Bereitstellungsstufe mindestens eine Schicht enthält, die mindestens 1 Gewichts-% photothermisches Material umfasst, bezogen auf das Gewicht der Schicht.

40. Verfahren nach einem der vorhergehenden Ansprüche, bei dem die Folie
eine Außenschicht der Folie und
einen oder mehrere diskontinuierliche Bereiche umfasst, die von der Außenschicht der Folie getragen werden,
wobei die ein oder mehreren diskontinuierlichen Bereiche mindestens einen Teil des photothermischen Materials umfassen.

41. Verfahren nach einem der vorhergehenden Ansprüche, bei dem die Folie
eine Außenschicht der Folie und
ein oder mehrere diskontinuierliche Bereiche umfasst, die von der Außenschicht der Folie getragen werden,
wobei die ein oder mehreren diskontinuierlichen Bereiche mindestens einen Teil der thermoplastischen Polymere und mindestens einen Teil des photothermischen Materials umfassen.

42. Verfahren nach einem der vorhergehenden Ansprüche, bei dem ferner ein Produkt in eine Verpackung eingeschlossen wird, die aus der Folie der Bereitstellungsstufe vor der Aussetzungsstufe gebildet worden ist.

43. Verfahren nach Anspruch 42, bei dem das Produkt ein Lebensmittelprodukt umfasst.

## Revendications

1. Procédé de mise en oeuvre de la propriété de retrait d'un film, lequel procédé comporte les étapes suivantes :
- prendre un film comprenant :
- un ou plusieurs polymère(s) thermoplastique(s),
- et au moins environ 0,01 %, en poids rapporté au poids du film, d'un matériau photothermique comprenant un ou plusieurs matériau(x) choisi(s) parmi les matériaux photothermiques organiques et les dioxyde de titane, oxyde de zinc, oxydes de fer, oxyde d'étain, sulfure de zinc, nitrure de gallium, disulfure de gallium, chlorure cuivreux, disulfure de cuivre et d'aluminium, et carbure de silicium ;
- et exposer le film à l'action d'un rayonnement non-ionisant, sous une intensité moyenne au niveau de la surface du film d'au moins 10 mW/cm², lequel rayonnement comporte des longueurs d'onde de 200 à 700 nm, de manière à produire de la chaleur pour qu'ainsi :
- le film se rétracte d'au moins 5 % dans au moins une direction ;
- et/ou la tension au sein du film augmente d'au moins 0,35 MPa (50 psi ou "livres par pouce carré") dans au moins une direction.

2. Procédé conforme à la revendication 1, dans lequel le matériau photothermique comprend des particules photothermiques.

3. Procédé conforme à la revendication 2, dans lequel les particules photothermiques présentent une taille moyenne d'au moins 100 nm dans au moins une dimension.

4. Procédé conforme à la revendication 2, dans lequel les particules photothermiques présentent une taille moyenne d'au moins 105 nm dans la dimension la plus petite.

5. Procédé conforme à l'une des revendications 2 à 4, dans lequel les particules photothermiques comprennent un matériau photothermique inorganique.

6. Procédé conforme à l'une des revendications 2 à 5, dans lequel les particules photothermiques comprennent au moins 40 % en poids de dioxyde titane TiO₂.

7. Procédé conforme à l'une des revendications 2 à 6, dans lequel les particules photothermiques comprennent au moins 40 % en poids d'oxyde de zinc ZnO.

8. Procédé conforme à l'une des revendications 2 à 7, dans lequel les particules photothermiques comprennent au moins 40 % en poids d'un ou plusieurs matériau(x) choisi(s) parmi les oxydes de fer Fe₂O₃ et Fe₃O₄, l'oxyde d'étain SnO₂, le sulfure de zinc ZnS, le nitrure de gallium GaN, le disulfure de gallium GaS₂, le chlorure cuivreux CuCl, le disulfure de cuivre et d'aluminium CuAlS₂, le carbure de silicium SiC, et les fullerènes semiconducteurs.

9. Procédé conforme à l'une des revendications 2 à 8, dans lequel les particules photothermiques comprennent au moins 40 % en poids d'un ou plusieurs matériau(x) présentant une bande interdite photonique d'au moins 3,1 eV à 20 °C (68 °F).

10. Procédé conforme à l'une des revendications précédentes, dans lequel le matériau photothermique est en solution avec le ou les polymère(s) thermoplastique(s).

11. Procédé conforme à l'une des revendications précédentes, dans lequel le matériau photothermique se trouve incorporé dans la structure moléculaire du ou des polymère(s) thermoplastique(s).

12. Procédé conforme à l'une des revendications précédentes, dans lequel la température du film, au début de l'étape d'exposition, vaut au plus 38 °C (100 °F).

13. Procédé conforme à l'une des revendications précédentes, qui comporte en outre une étape consistant à chauffer le film de manière à ce que la température du film au début de l'étape d'exposition soit d'au moins 2,8 °C (5 °F) au-dessous de la température à laquelle le film commence à se rétracter, laquelle étape de chauffage est réalisée autrement que par exposition à un rayonnement.

14. Procédé conforme à l'une des revendications précédentes, dans lequel le film qu'on prend se rétracte librement, à 150 °C (300 °F) et dans au moins une direction, d'au moins 20 %, ce taux de retrait étant mesuré selon la norme ASTM D-2732.

15. Procédé conforme à l'une des revendications précédentes, dans lequel le film que l'on prend se rétracte librement, à 85 °C (185 °F) et dans au moins une direction, d'au moins 10 %, ce taux de retrait étant mesuré selon la norme ASTM D-2732.

16. Procédé conforme à l'une des revendications précédentes, dans lequel l'étape d'exposition entraîne un retrait d'au moins 5 % du film, dans au moins une direction.

17. Procédé conforme à l'une des revendications précédentes, dans lequel l'étape d'exposition entraîne un retrait du film, dans au moins une direction, d'au moins 5 % de plus que la valeur du retrait obtenue, dans la même direction, quand on expose un film comparatif à la même quantité de rayonnement non-ionisant et dans les mêmes conditions que dans l'étape d'exposition, lequel film comparatif ne diffère du film pris que par le fait qu'il ne contient pas de matériau photothermique.

18. Procédé conforme à l'une des revendications précédentes, dans lequel le film que l'on prend présente, à 85 °C (185 °F) et dans au moins une direction, une tension de retrait, mesurée selon la norme ASTM D-2838 (protocole A), d'au moins 0,35 MPa (50 psi).

19. Procédé conforme à l'une des revendications précédentes, dans lequel l'étape d'exposition entraîne une augmentation d'au moins 0,7 MPa (100 psi) de la tension au sein du film, dans au moins une direction.

20. Procédé conforme à l'une des revendications précédentes, dans lequel l'étape d'exposition entraîne une augmentation de la tension au sein du film, dans au moins une direction, d'au moins 0,35 MPa (50 psi) de plus que l'augmentation de la tension de retrait obtenue, dans la même direction, quand on expose un film comparatif à la même quantité de rayonnement non-ionisant et dans les mêmes conditions que dans l'étape d'exposition, lequel film comparatif ne diffère du film pris que par le fait qu'il ne contient pas de matériau photothermique.

21. Procédé conforme à l'une des revendications précédentes, dans lequel, après l'étape d'exposition, le film présente une transparence moyenne, mesurée selon la norme ASTM D-1746, d'au moins 80 %.

22. Procédé conforme à l'une des revendications précédentes, dans lequel le film que l'on prend présente une vitesse de transmission de l'oxygène, mesurée à 23 °C et pour un taux d'humidité relative de 0 %, d'au plus 100 cm³ (à température et pression standard) par mètre carré, par jour et par atmosphère de différence de pression d'oxygène.

23. Procédé conforme à l'une des revendications précédentes, dans lequel le film qu'on prend comporte une couche comprenant, en une quantité représentant au moins 60 % du poids de cette couche, un ou plusieurs polymère(s) choisi(s) parmi les copolymères d'éthylène et d'alcool vinylique et les polymères de chlorure de vinylidène.

24. Procédé conforme à l'une des revendications précédentes, dans lequel le film qu'on prend comporte une couche comprenant, en une quantité représentant au moins 60 % du poids de cette couche, un ou plusieurs polymère(s) choisi(s) parmi les polyamides et les polyesters.

25. Procédé conforme à l'une des revendications précédentes, dans lequel le film comprend au moins 50 % de polyoléfine, en poids rapporté au poids du film.

26. Procédé conforme à l'une des revendications précédentes, dans lequel le film comporte au moins trois couches.

27. Procédé conforme à l'une des revendications précédentes, dans lequel le film comporte au moins une couche qui comprend au moins 50 % du poids total du matériau photothermique présent dans le film.

28. Procédé conforme à l'une des revendications précédentes, dans lequel le film est épais d'au moins 0,025 mm (1 millième de pouce).

29. Procédé conforme à l'une des revendications précédentes, dans lequel le film comprend un matériau photothermique en une quantité représentant au moins 0,05 % du poids du film.

30. Procédé conforme à l'une des revendications précédentes, dans lequel le matériau photothermique comprend un ou plusieurs matériau(x) photothermique(s) organique(s) choisi(s) parmi les suivants : absorbant UV de type benzophénone, absorbant UV de type benzotriazole, acide para-amino-benzoïque, avobenzone, 3-benzylidène-camphre, acide benzylidène-camphre-sulfonique, bisymidazylate, méthosulfate de camphre-benzalkonium, cinoxate, diéthylamino-hydroxybenzoyl-benzoate d'hexyle, diéthylhexyl-butamido-triazone, diméthicodiéthylbenzal-malonate, dioxybenzone, drométrizole-trisiloxane, ecamsule, ensulizole, homosalate, p-méthoxy-cinnamate d'isoamyle, 4-méthyl-benzylidène-camphre, anthranilate de menthyle, octocrylène, para-(diméthylamino)-benzoate d'octyle, méthoxy-cinnamate d'octyle, salicylate d'octyle, octyl-triazone, oxybenzone, para-amino-benzoate de PEG-25, polyacrylamidométhyl-benzylidène-camphre, sulisobenzone, bis(éthylhexyloxyphénol)-méthoxyphénol-triazine, méthylène-bis(benzotriazolyl-tétraméthylbutyl-phénol), et salicylate de trolamine.

31. Procédé conforme à l'une des revendications précédentes, dans lequel la quantité effective de rayonnement non-ionisant équivaut à une intensité moyenne d'au moins 100 mW/cm² au niveau de la surface du film.

32. Procédé conforme à l'une des revendications précédentes, dans lequel le rayonnement comporte des longueurs d'onde de 200 à 400 nm, et l'irradiation dure au plus 30 secondes.

33. Procédé conforme à l'une des revendications 1 à 31, dans lequel l'irradiation est effectuée à une dose surfacique de rayonnement d'au moins 100 mJ/cm² avec un rayonnement comportant des longueurs d'onde de 200 à 400 nm, et dure au plus environ 10 secondes.

34. Procédé conforme à l'une des revendications 1 à 31, dans lequel le rayonnement comporte des longueurs d'onde d'environ 200 nm à environ 400 nm.

35. Procédé conforme à l'une des revendications 1 à 31, dans lequel l'étape d'exposition comporte le fait d'exposer le film à un rayonnement dont l'intensité moyenne vaut au moins 1000 mW/cm² au niveau de la surface du film et qui comporte des longueurs d'onde de 200 à 400 nm.

36. Procédé conforme à l'une des revendications 1 à 31, 34 et 35, dans lequel l'étape d'exposition à un rayonnement non-ionisant se déroule en au plus environ 10 secondes.

37. Procédé conforme à l'une des revendications 1 à 31, dans lequel le rayonnement non-ionisant comprend au moins 15 % de rayonnement de longueurs d'onde de 200 à 400 nm, par rapport à la quantité totale de rayonnement non-ionisant utilisé dans l'étape d'exposition.

38. Procédé conforme à l'une des revendications précédentes, dans lequel le film que l'on prend comporte au moins une couche qui comprend au moins 0,01 % de matériau photothermique, en poids rapporté au poids de cette couche.

39. Procédé conforme à l'une des revendications précédentes, dans lequel le film que l'on prend comporte au moins une couche qui comprend au moins 1 % de matériau photothermique, en poids rapporté au poids de cette couche.

40. Procédé conforme à l'une des revendications précédentes, dans lequel le film comporte :
- une couche externe de film,
- et une ou plusieurs région(s) discontinue(s) supportées par la couche externe du film, laquelle ou lesquelles région(s) discontinue(s) contient ou contiennent au moins une partie du matériau photothermique.

41. Procédé conforme à l'une des revendications précédentes, dans lequel le film comporte :
- une couche externe de film,
- et une ou plusieurs région(s) discontinue(s) supportées par la couche externe du film, laquelle ou lesquelles région(s) discontinue(s) contient ou contiennent au moins une partie des polymères thermoplastiques et au moins une partie du matériau photothermique.

42. Procédé conforme à l'une des revendications précédentes, qui comporte en outre, avant l'étape d'exposition à un rayonnement, le fait d'enfermer un produit dans un emballage constitué du film que l'on prend.

43. Procédé conforme à la revendication 42, dans lequel le produit comprend un produit alimentaire.
